# EUROPEAN PATENT APPLICATION

(11) **EP 4 823 229 A1**
(43) Date of publication of application: **14.10.2026**
(21) Application number: 25751631.0
(22) Date of filing: 07.02.2025
(51) Int. Cl.: H04W 76/27

(54) **CONFIGURATION METHOD FOR WIRELESS COMMUNICATION, DEVICE, AND STORAGE MEDIUM**

(30) Priority: 07.02.2024 CN 202410175800
(71) Applicant: Honor Device Co., Ltd., Shenzhen, Guangdong 518040 (CN)
(72) Inventor: ZHENG, Xiaoxiao, Shenzhen, Guangdong 518040 (CN)
(74) Representative: Isarpatent
(86) International application number: PCT/CN2025/076120
(87) International publication number: WO 2025/168032

(57) **Abstract**

This application provides a wireless communication configuration method, a device, and a storage medium. The method includes: obtaining indication information; and upon transition to a radio resource control inactive state based on the indication information, storing L1/L2-triggered mobility configuration information. In this application, the LTM configuration information is stored rather than removed upon transition to RRC_INACTIVE. Thereby, if subsequently a terminal device still performs access in a candidate cell corresponding to the LTM configuration information, the terminal device may indicate to a network device and continue to use the LTM configuration information. Consequently, downlink signaling overheads are reduced, interruption caused by state transition to data transmission and handover is reduced, and user experience is improved.

## Description

This application claims priority to Chinese Patent Application No. 202410175800.0, filed with the China National Intellectual Property Administration on February 7, 2024 and entitled "WIRELESS COMMUNICATION CONFIGURATION METHOD, DEVICE, AND STORAGE MEDIUM", which is incorporated herein by reference in its entirety.

### TECHNICAL FIELD

This application relates to the field of communication technologies, and in particular, to a wireless communication configuration method, a device, and a storage medium.

### BACKGROUND

In a related technology, when a terminal device transitions to an RRC (Radio Resource Control, radio resource control) inactive (RRC_INACTIVE) state, the terminal device releases corresponding LTM (L1/L2 Triggered Mobility, L1/L2-triggered mobility, where L1 is layer 1, and L2 is layer 2) configuration information. Therefore, when the terminal device transitions from RRC_INACTIVE to an RRC connected (RRC_CONNECTED) state or the terminal device performs cell handover, there is a need to transmit LTM configuration information again to the terminal device. Consequently, downlink signaling overheads are high, and the state transition causes interruption to data transmission and handover.

### SUMMARY

Embodiments of this application provide a wireless communication configuration method, a device, and a storage medium, to avoid high downlink signaling overheads, and reduce interruption caused by state transition to data transmission and handover.

According to a first aspect, an embodiment of this application provides a wireless communication configuration method, where the method includes: obtaining indication information; and upon transition to a radio resource control inactive state based on the indication information, storing L1/L2-triggered mobility configuration information.

In an optional embodiment of the first aspect, the indication information is carried in a radio resource control release message.

In an optional embodiment of the first aspect, the radio resource control release message carries at least one of the following: a timer, a cell identity of a valid cell, and a radio notification area list of a validity area; the timer indicates the L1/L2-triggered mobility configuration information; and both the cell identity of the valid cell and the radio notification area list of the validity area indicate an applicable cell of the L1/L2-triggered mobility configuration information.

In an optional embodiment of the first aspect, the L1/L2-triggered mobility configuration information includes configuration information of a first serving cell and configuration information of each candidate cell of the first serving cell, and the first serving cell is a serving cell in which the L1/L2-triggered mobility configuration information is stored.

In an optional embodiment of the first aspect, the configuration information of the candidate cell includes at least one of the following: L1 or L2 measurement information, channel resource information, user plane bearer information, control plane bearer information, and information for early acquisition of uplink or downlink synchronization.

In an optional embodiment of the first aspect, the method further includes: sending first information to a network device, where the first information indicates that the L1/L2-triggered mobility configuration information is available.

In an optional embodiment of the first aspect, the first information includes a terminal device identifier and/or a candidate cell identity, and the candidate cell identity is a cell identity of a candidate cell in the L1/L2-triggered mobility configuration information.

In an optional embodiment of the first aspect, the first information is carried in a radio resource control resume request message.

In an optional embodiment of the first aspect, the first serving cell in which the L1/L2-triggered mobility configuration information is stored is the same as a second serving cell in which the first information is sent; or the first serving cell in which the L1/L2-triggered mobility configuration information is stored is different from a second serving cell in which the first information is sent.

In an optional embodiment of the first aspect, the second serving cell is a candidate cell in the L1/L2-triggered mobility configuration information, and sending the first information to the network device includes: under a preset condition, applying the L1/L2-triggered mobility configuration information, and sending the first information to the network device, where the preset condition includes: a current time meets a time specified by the timer, and/or the second serving cell is a valid cell.

In an optional embodiment of the first aspect, the method further includes: obtaining second information, where the second information indicates a handling manner of the L1/L2-triggered mobility configuration information; and performing corresponding handling on the L1/L2-triggered mobility configuration information according to the handling manner.

In an optional embodiment of the first aspect, the handling manner includes one of the following: retaining the L1/L2-triggered mobility configuration information, removing the LTM configuration information, updating the L1/L2-triggered mobility configuration information, or adding the L1/L2-triggered mobility configuration information.

According to a second aspect, an embodiment of this application provides a wireless communication configuration method, including: obtaining first information, where the first information indicates that L1/L2-triggered mobility configuration information is available.

In an optional embodiment of the second aspect, the first information is carried in a radio resource control resume request message.

In an optional embodiment of the second aspect, the first information includes a terminal device identifier and/or a candidate cell identity, and the candidate cell identity is a cell identity of a candidate cell in the radio resource control configuration information.

In an optional embodiment of the second aspect, the method further includes: obtaining the L1/L2-triggered mobility configuration information based on the terminal device identifier and/or the candidate cell identity; and determining a handling manner of the L1/L2-triggered mobility configuration information, and indicating second information, where the second information indicates the handling manner of the L1/L2-triggered mobility configuration information.

In an optional embodiment of the second aspect, obtaining the L1/L2-triggered mobility configuration information includes: obtaining the L1/L2-triggered mobility configuration information from a source network device, where the source network device is a serving network device that configures the L1/L2-triggered mobility configuration information for the terminal device.

In an optional embodiment of the second aspect, determining the handling manner of the L1/L2-triggered mobility configuration information includes: obtaining resource usage of a second serving cell and a neighboring cell of the second serving cell, where the second serving cell is a cell currently accessed by the terminal device; obtaining a measurement report carried in the radio resource control resume request message; and determining the handling manner of the L1/L2-triggered mobility configuration information based on the resource usage and the measurement report.

In an optional embodiment of the second aspect, the handling manner includes one of the following: retaining the L1/L2-triggered mobility configuration information, removing the L1/L2-triggered mobility configuration information, updating the L1/L2-triggered mobility configuration information, or adding the L1/L2-triggered mobility configuration information.

According to a third aspect, an embodiment of this application provides a wireless communication configuration method, including: obtaining indication information, where the indication information includes a terminal device identifier and/or a candidate cell identity; retrieving L1/L2-triggered mobility configuration information corresponding to the terminal device identifier and/or the candidate cell identity; obtaining validity information of configuration information of a candidate cell in the L1/L2-triggered mobility configuration information; updating the L1/L2-triggered mobility configuration information based on the validity information, to obtain updated L1/L2-triggered mobility configuration information; and sending response information, where the response information includes the L1/L2-triggered mobility configuration information or the updated L1/L2-triggered mobility configuration information.

In an optional embodiment of the third aspect, the indication information is carried in a terminal device context request message or another Xn interface message.

In an optional embodiment of the third aspect, the response information is carried in a terminal device context response message or another Xn interface message.

In an optional embodiment of the third aspect, obtaining the validity information of the configuration information of the candidate cell in the L1/L2-triggered mobility configuration information includes: sending a first request message to another network device corresponding to the candidate cell, where the first request message indicates the another network device to determine the validity information of the configuration information of the candidate cell; and obtaining the validity information sent by the another network device.

In an optional embodiment of the third aspect, the validity information includes at least one of the following: a cell identity of a candidate cell whose configuration information is valid, a cell identity of a candidate cell whose configuration information is unavailable, and a cell identity of a candidate cell whose configuration information needs to be updated that are in the L1/L2-triggered mobility configuration information.

In an optional embodiment of the third aspect, updating the L1/L2-triggered mobility configuration information based on the validity information, to obtain the updated L1/L2-triggered mobility configuration information includes:
if the validity information indicates that the configuration information of the candidate cell is unavailable, removing the configuration information of the candidate cell from the L1/L2-triggered mobility configuration information; or
if the validity information indicates that the configuration information of the candidate cell is valid, retaining the configuration information of the candidate cell in the L1/L2-triggered mobility configuration information; or
if the validity information indicates that the configuration information of the candidate cell needs to be updated, retaining the configuration information of the candidate cell in the L1/L2-triggered mobility configuration information or removing the configuration information of the candidate cell from the L1/L2-triggered mobility configuration information.

In an optional embodiment of the third aspect, the method further includes: adding configuration information of a candidate cell to the L1/L2-triggered mobility configuration information based on a second serving cell and neighboring cell information of the second serving cell, where the second serving cell is a cell currently accessed by the terminal device.

According to a fourth aspect, an embodiment of this application provides a terminal device, including:
an obtaining module, configured to obtain indication information; and
a storage module, configured to: upon transition to a radio resource control inactive state based on the indication information, store L1/L2-triggered mobility configuration information.

In an optional embodiment of the fourth aspect, the indication information is carried in a radio resource control release message.

In an optional embodiment of the fourth aspect, the radio resource control release message carries at least one of the following: a timer, a cell identity of a valid cell, and a radio notification area list of a validity area; the timer indicates the L1/L2-triggered mobility configuration information; and both the cell identity of the valid cell and the radio notification area list of the validity area indicate an applicable cell of the L1/L2-triggered mobility configuration information.

In an optional embodiment of the fourth aspect, the L1/L2-triggered mobility configuration information includes configuration information of a first serving cell and configuration information of each candidate cell of the first serving cell, and the first serving cell is a serving cell in which the L1/L2-triggered mobility configuration information is stored.

In an optional embodiment of the fourth aspect, the configuration information of the candidate cell includes at least one of the following: L1 or L2 measurement information, channel resource information, user plane bearer information, control plane bearer information, and information for early acquisition of uplink or downlink synchronization.

In an optional embodiment of the fourth aspect, the terminal device further includes a sending module, configured to send first information to a network device, where the first information indicates that the L1/L2-triggered mobility configuration information is available.

In an optional embodiment of the fourth aspect, the first information includes a terminal device identifier and/or a candidate cell identity, and the candidate cell identity is a cell identity of a candidate cell in the L1/L2-triggered mobility configuration information.

In an optional embodiment of the fourth aspect, the first information is carried in a radio resource control resume request message.

In an optional embodiment of the fourth aspect, the first serving cell in which the L1/L2-triggered mobility configuration information is stored is the same as a second serving cell in which the first information is sent; or the first serving cell in which the L1/L2-triggered mobility configuration information is stored is different from a second serving cell in which the first information is sent.

In an optional embodiment of the fourth aspect, the second serving cell is a candidate cell in the L1/L2-triggered mobility configuration information, and the sending module is specifically configured to: under a preset condition, apply the L1/L2-triggered mobility configuration information, and send the first information to the network device, where the preset condition includes: a current time meets a time specified by the timer, and/or the second serving cell is a valid cell.

In an optional embodiment of the fourth aspect, the obtaining module is further configured to obtain second information, where the second information indicates a handling manner of the L1/L2-triggered mobility configuration information; and the terminal device further includes a handling module, configured to perform corresponding handling on the L1/L2-triggered mobility configuration information according to the handling manner.

In an optional embodiment of the fourth aspect, the handling manner includes one of the following: retaining the L1/L2-triggered mobility configuration information, removing the LTM configuration information, updating the L1/L2-triggered mobility configuration information, or adding the L1/L2-triggered mobility configuration information.

According to a fifth aspect, an embodiment of this application provides a network device, including:
an obtaining module, configured to obtain first information, where the first information indicates that L1/L2-triggered mobility configuration information is available.

In an optional embodiment of the fifth aspect, the first information is carried in a radio resource control resume request message.

In an optional embodiment of the fifth aspect, the first information includes a terminal device identifier and/or a candidate cell identity, and the candidate cell identity is a cell identity of a candidate cell in the radio resource control configuration information.

In an optional embodiment of the fifth aspect, the obtaining module is further configured to obtain the L1/L2-triggered mobility configuration information based on the terminal device identifier and/or the candidate cell identity; and the network device further includes a determining module, configured to: determine a handling manner of the L1/L2-triggered mobility configuration information, and indicate second information, where the second information indicates the handling manner of the L1/L2-triggered mobility configuration information.

In an optional embodiment of the fifth aspect, the obtaining module is specifically configured to obtain the L1/L2-triggered mobility configuration information from a source network device, where the source network device is a serving network device that configures the L1/L2-triggered mobility configuration information for the terminal device.

In an optional embodiment of the fifth aspect, the determining module is specifically configured to: obtain resource usage of a second serving cell and a neighboring cell of the second serving cell, where the second serving cell is a cell currently accessed by the terminal device; obtain a measurement report carried in the radio resource control resume request message; and determine the handling manner of the L1/L2-triggered mobility configuration information based on the resource usage and the measurement report.

In an optional embodiment of the fifth aspect, the handling manner includes one of the following: retaining the L1/L2-triggered mobility configuration information, removing the L1/L2-triggered mobility configuration information, updating the L1/L2-triggered mobility configuration information, or adding the L1/L2-triggered mobility configuration information.

According to a sixth aspect, an embodiment of this application provides a network device, including:
a first obtaining module, configured to obtain indication information, where the indication information includes a terminal device identifier and/or a candidate cell identity;
a retrieving module, configured to retrieve L1/L2-triggered mobility configuration information corresponding to the terminal device identifier and/or the candidate cell identity;
a second obtaining module, configured to obtain validity information of configuration information of a candidate cell in the L1/L2-triggered mobility configuration information;
an update module, configured to update the L1/L2-triggered mobility configuration information based on the validity information, to obtain updated L1/L2-triggered mobility configuration information; and
a sending module, configured to send response information, where the response information includes the L1/L2-triggered mobility configuration information or the updated L1/L2-triggered mobility configuration information.

In an optional embodiment of the sixth aspect, the indication information is carried in a terminal device context request message or another Xn interface message.

In an optional embodiment of the sixth aspect, the response information is carried in a terminal device context response message or another Xn interface message.

In an optional embodiment of the sixth aspect, the second obtaining module is specifically configured to: send a first request message to another network device corresponding to the candidate cell, where the first request message indicates the another network device to determine the validity information of the configuration information of the candidate cell; and obtain the validity information sent by the another network device.

In an optional embodiment of the sixth aspect, the validity information includes at least one of the following: a cell identity of a candidate cell whose configuration information is valid, a cell identity of a candidate cell whose configuration information is unavailable, and a cell identity of a candidate cell whose configuration information needs to be updated that are in the L1/L2-triggered mobility configuration information.

In an optional embodiment of the sixth aspect, the update module is specifically configured to:
if the validity information indicates that the configuration information of the candidate cell is unavailable, remove the configuration information of the candidate cell from the L1/L2-triggered mobility configuration information; or
if the validity information indicates that the configuration information of the candidate cell is valid, retain the configuration information of the candidate cell in the L1/L2-triggered mobility configuration information; or
if the validity information indicates that the configuration information of the candidate cell needs to be updated, retain the configuration information of the candidate cell in the L1/L2-triggered mobility configuration information or remove the configuration information of the candidate cell from the L1/L2-triggered mobility configuration information.

In an optional embodiment of the sixth aspect, the update module is further configured to: add configuration information of a candidate cell to the L1/L2-triggered mobility configuration information based on a second serving cell and neighboring cell information of the second serving cell, where the second serving cell is a cell currently accessed by the terminal device.

According to a seventh aspect, an embodiment of this application provides an electronic device, including a processor and a memory, where the memory stores computer-executable instructions; and the processor executes the computer-executable instructions stored in the memory, to enable a network device to perform the method according to the first aspect, the second aspect, or the third aspect.

According to an eighth aspect, an embodiment of this application provides a computer-readable storage medium, where the computer-readable storage medium stores a computer program, and when the computer program is executed by a processor, the method according to the first aspect, the second aspect, or the third aspect is implemented.

According to a ninth aspect, an embodiment of this application provides a computer program product, where the computer program product includes a computer program, and when the computer program is run, a computer is enabled to perform the method according to the first aspect, the second aspect, or the third aspect.

This application provides a wireless communication configuration method, a device, and a storage medium. The method includes: obtaining indication information; and upon transition to a radio resource control inactive state based on the indication information, storing L1/L2-triggered mobility configuration information. In this application, the LTM configuration information is stored rather than removed upon transition to RRC_INACTIVE. Thereby, if subsequently a terminal device still performs access in a candidate cell corresponding to the LTM configuration information, the terminal device may indicate to a network device and continue to use the LTM configuration information. Consequently, downlink signaling overheads are reduced, interruption caused by state transition to data transmission and handover is reduced, and user experience is improved.

### BRIEF DESCRIPTION OF DRAWINGS

FIG. 1 is a diagram of an architecture of a communication system according to an embodiment of this application;
FIG. 2A to FIG. 2C are a flowchart 1 of a cell handover procedure according to an embodiment of this application;
FIG. 3 is a flowchart 2 of a cell handover procedure according to an embodiment of this application;
FIG. 4A and FIG. 4B are a flowchart 3 of a cell handover procedure according to an embodiment of this application;
FIG. 5 is a flowchart 1 of a wireless communication configuration method according to an embodiment of this application;
FIG. 6 is a diagram of a network device sending an RRC release message to a terminal device according to an embodiment of this application;
FIG. 7 is a diagram 1 of a wireless communication configuration method according to an embodiment of this application;
FIG. 8 is a diagram 2 of a wireless communication configuration method according to an embodiment of this application;
FIG. 9 is a flowchart 2 of a wireless communication configuration method according to an embodiment of this application;
FIG. 10 is a diagram 3 of a wireless communication configuration method according to an embodiment of this application;
FIG. 11 is a diagram 4 of a wireless communication configuration method according to an embodiment of this application;
FIG. 12 is a diagram 5 of a wireless communication configuration method according to an embodiment of this application;
FIG. 13 is a diagram 6 of a wireless communication configuration method according to an embodiment of this application;
FIG. 14 is a flowchart 3 of a wireless communication configuration method according to an embodiment of this application;
FIG. 15 is a block diagram of a structure of a terminal device according to an embodiment of this application;
FIG. 16 is a block diagram 1 of a structure of a network device according to an embodiment of this application;
FIG. 17 is a block diagram 2 of a structure of a network device according to an embodiment of this application; and
FIG. 18 is a diagram of a hardware structure of an electronic device according to an embodiment of this application.

### DESCRIPTION OF EMBODIMENTS

To clearly describe the technical solutions in embodiments of this application, in embodiments of this application, the terms such as "example" and "for example" are used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a related concept in a specific manner.

In embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of the following items (pieces): a, b, or c may indicate: a, b, c, a and b, a and c, b and c, or a, b, and c, where a, b, and c may be singular or plural.

It should be noted that in embodiments of this application, "when..." or "in a case..." may be an instantaneous occurrence time of a case, or may be a period of time after occurrence of a case, which is not specifically limited in embodiments of this application. In addition, a display interface provided in embodiments of this application is merely an example, and the display interface may further include more or less content.

The following first briefly describes the terms in embodiments of this application.

To better understand an information indication method provided in embodiments of this application, the following first describes an architecture of a communication system in embodiments of this application.

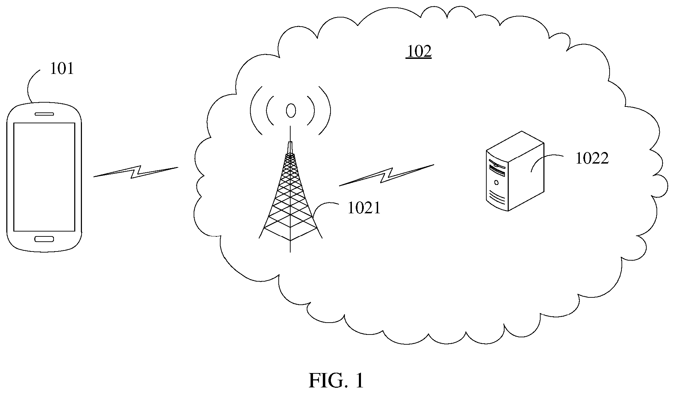

For example, FIG. 1 is a diagram of an architecture of a communication system according to an embodiment of this application. As shown in FIG. 1, the communication system 100 includes a terminal device 101 and a network device 102. The terminal device 101 and the network device 102 perform wireless communication with each other.

The terminal device in embodiments of this application may also be referred to as a terminal, and may be a device having a wireless transceiver function. The terminal device may be deployed on land, including indoors or outdoors, and in a handheld manner or in a vehicle-mounted manner; may be deployed on water (for example, on a ship); or may be deployed in the air (for example, on an airplane, a balloon, and a satellite). The terminal device may be user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self driving, a wireless terminal in telemedicine, a wireless terminal in smart grid, a wireless terminal in smart city (smart city), a wireless terminal in smart home (smart home), or the like. In embodiments of this application, an apparatus configured to implement a function of the terminal may be a terminal, or may be an apparatus that can support the terminal in implementing the function, for example, a chip system, where the apparatus may be installed in the terminal.

The network device 102 in this embodiment of this application includes an access network device 1021 and a core network device 1022.

The access network (radio access network, RAN) device is an intermediate device through which a terminal wirelessly accesses a core network device, mainly responsible for radio resource management, quality of service (quality of service, QoS) management, data compression and encryption, and the like on an air interface side, for example, a network device NodeB, an evolved network device eNodeB, a network device in a 5G mobile communication system or a new radio (new radio, NR) communication system, a network device in a future mobile communication system, or the like.

The core network (core network, CN) device includes a user plane function (user plane function, UPF) network element, an access and mobility management function (access and mobility management function, AMF) network element, a session management function (session management function, SMF) network element, a policy control function (policy control function, PCF) network element, and the like. The UPF network element is mainly responsible for transmission of user data, and other network elements may be referred to as control plane function network elements and are mainly responsible for authentication, authorization, registration management, session management, mobility management, policy control, and the like, to ensure reliable and stable transmission of user data.

In embodiments of this application, an apparatus configured to implement a function of the network device may be a network device, or may be an apparatus that can support the network device in implementing the function, for example, a chip system, where the apparatus may be installed in the network device.

The technical solutions provided in embodiments of this application may be applied to a long term evolution (Long Term Evolution, LTE) architecture, or a universal mobile telecommunications system (Universal Mobile Telecommunications System, UMTS) terrestrial radio access network (UMTS Terrestrial Radio Access Network, UTRAN) architecture, or a radio access network (GSM EDGE Radio Access Network, GERAN) architecture of a global system for mobile communications (Global System for Mobile Communication, GSM)/enhanced data rate for GSM evolution (Enhanced Data Rate for GSM Evolution, EDGE). In addition, the technical solutions provided in embodiments of this application may be further applied to any other wireless communication system having a similar structure and function, for example, a public land mobile network (Public Land Mobile Network, PLMN) system, a 5G communication system, or a communication system after 5G. This is not limited in embodiments of this application.

Wireless communication between communication devices may include wireless communication between a network device and a terminal, wireless communication between network devices, and wireless communication between terminals. In embodiments of this application, the term "wireless communication" may also be briefly referred to as "communication", and the term "communication" may also be described as "data transmission", "information transmission", or "transmission". A person skilled in the art may use the technical solutions provided in embodiments of this application for wireless communication between a network device and a terminal, for example, wireless communication between an access network device and a terminal, and wireless communication between a core network device and a terminal.

When a terminal device connected to a network device is in RRC_IDLE (radio resource control idle state), and quality of a radio link of a current serving cell is poor or there is a neighboring serving cell with better quality of service or a currently accessed network device needs to perform load balancing, the terminal device triggers handover to perform serving cell handover. The entire handover procedure includes three phases: handover preparation, handover execution, and handover completion.

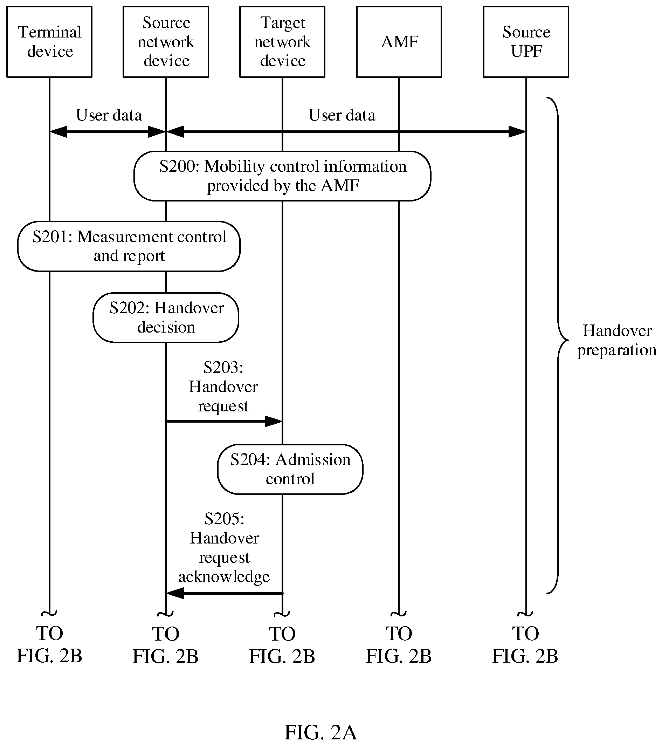

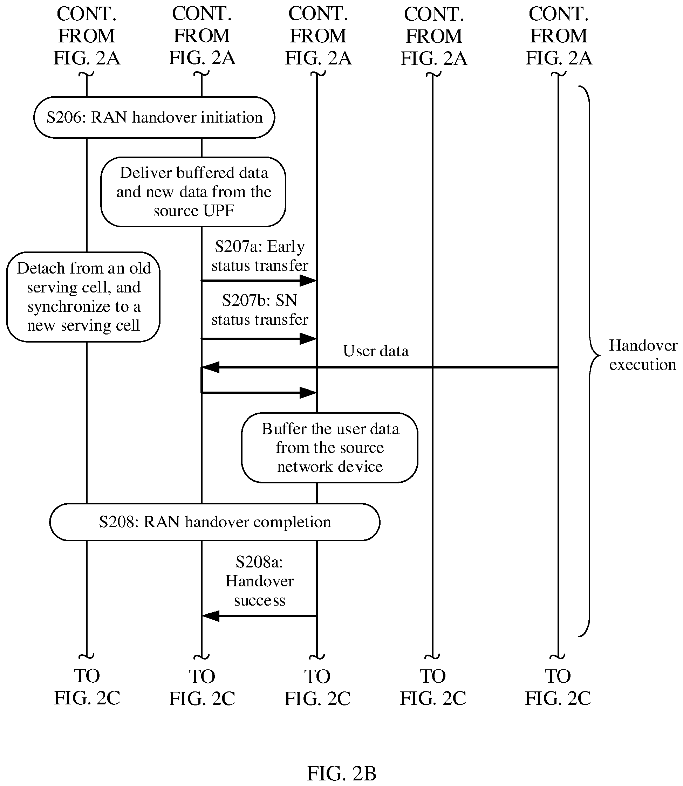

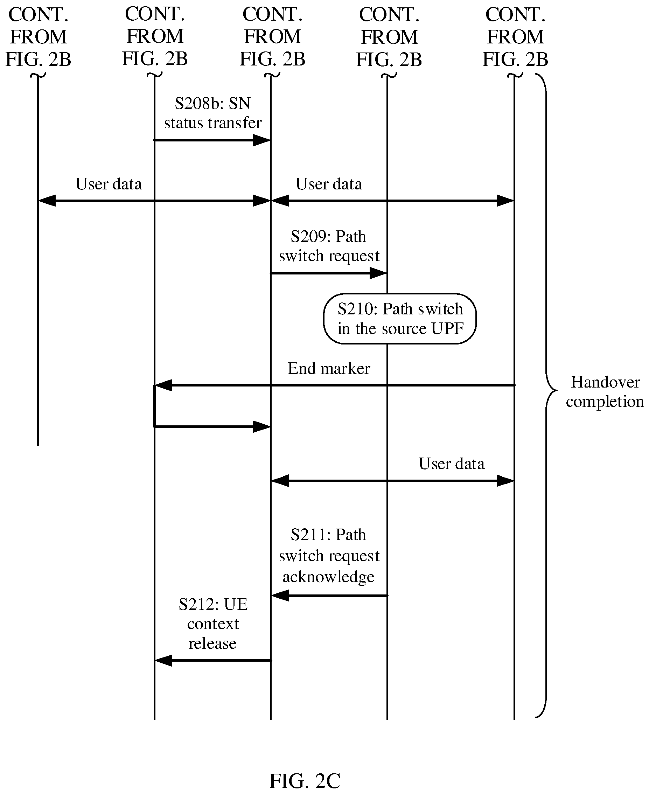

For example, with reference to FIG. 2, a specific serving cell handover procedure includes the following steps.

S200: Mobility control information provided by an AMF.

Before S200, a terminal device, a source network device, and the AMF (Access and Mobility Management Function, access and mobility management function) are all configured with user data.

Specifically, S200 indicates that the AMF provides the mobility control information for the source network device and a target network device.

S201: Measurement control and report.

The terminal device sends the measurement control and report to the source network device.

S202: Handover decision.

The source network device determines, based on the measurement control and report, whether to perform serving cell handover. If serving cell handover needs to be performed, a target network device of a target cell is determined.

S203: Handover request.

After determining to hand over a serving cell of the terminal device, the source network device sends the handover request to the target network device.

S204: Admission control.

The target network device determines whether to allow the terminal device to perform serving cell handover.

S205: Handover request acknowledge.

When the target network device allows the terminal device to perform serving cell handover, the target network device sends the handover request acknowledge to the source network device, to indicate to the source network device that the handover is accepted.

S200 to S205 are the handover preparation phase. After handover preparation is completed, a subsequent handover execution procedure is performed.

S206: RAN handover initiation.

Both the terminal device and the source network device initiate RAN handover. Then, the source network device delivers buffered data and new data from a source UPF (User Plane Function, user plane function), and the terminal device detaches from an old serving cell and synchronizes to a new serving cell.

S207a: Early status transfer.

S207b: SN status transfer.

Then, user data in the source UPF is delivered to the target network device through the source network device. Further, the target network device buffers the user data from the source network device.

S208: RAN handover completion.

S208 includes S208a: handover success, and S208b: SN status transfer.

In this embodiment of this application, S206 to S208 are the handover execution procedure.

S209: Path switch request.

The target network device sends the path switch request to the AMF.

S210: Path switch in the source UPF.

After receiving the path switch request, the AMF performs path switch in the source UPF.

After the path switch is completed, the source UPF sends an end marker to the target network device through the source network device. In addition, the target network device is configured with the user data.

S211: Path switch request acknowledge.

After the path switch is completed, the AMF sends the path switch request acknowledge to the target network device.

S212: UE context release.

After implementing the path switch, the target network device instructs the source network device to release UE context.

It can be learned that S209 to S212 are a handover completion procedure.

In this embodiment of this application, FIG. 2A to FIG. 2C show intra-AMF inter-network device handover of a serving cell for a terminal device. Through the procedure shown in FIG. 2A to FIG. 2C, the terminal device can implement handover of the serving cell.

Further, to reduce a latency of serving cell handover for the terminal device, R18 introduces L1/L2 triggered mobility (LTM), that is, switch controlled through L1/L2 signaling. When the terminal device is in RRC_CONNECTED, while configuration information of a candidate cell is pre-configured through a current serving cell (similar to CHO (Conditional Handover, conditional handover) and/or CPAC (Conditional PSCell Addition/Change, conditional primary secondary cell addition/change) preconfiguration), LTM configuration information is also preconfigured. The LTM configuration information includes configuration parameters, related to L1 or L2 measurement information and/or information for early acquisition of uplink or downlink synchronization, configured for the terminal device. Based on the LTM configuration information, for a configured candidate cell, the terminal device performs early acquisition of uplink/downlink synchronization information, and reports L1 or L2 measurement information in a periodic and semi-persistent manner. Based on the L1 or L2 measurement information reported by the terminal device, a network device ultimately makes a switch decision, and delivers a cell switch command (cell switch command) via a MAC CE (Multiple Access Channel Control Element, multiple access channel control element) message. The terminal device selects an access scheme (RACH or RACH-less) for a new cell based on a current UL (Up-Link, uplink) synchronization status. After a serving cell change, the terminal device stores the LTM configuration information. After entering a new serving cell, the terminal device may add a neighboring cell configuration according to requirements.

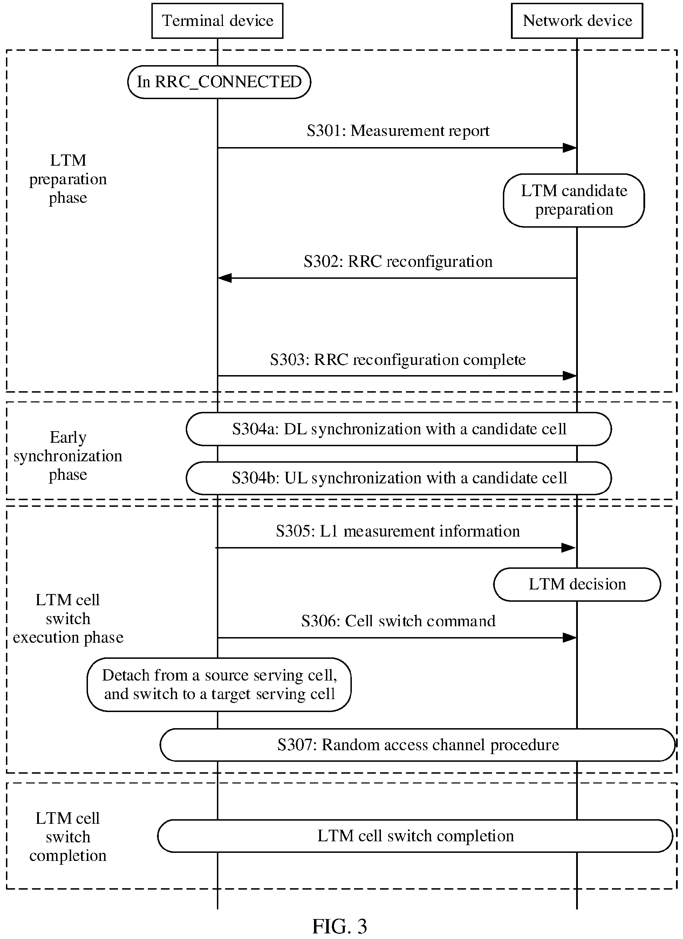

FIG. 3 shows cell switch in the LTM framework in the R18 specification, which specifically includes four phases in sequence: LTM preparation, early synchronization, LTM cell switch execution, and LTM cell switch completion. The cell switch specifically includes the following steps.

S301: Measurement report.

When a terminal device is in RRC_CONNECTED, the terminal device sends the measurement report to a network device.

S302: RRC reconfiguration.

The network device performs candidate preparation based on the measurement report, that is, generates LTM configuration information, stores the LTM configuration information on the network device side, and then sends the LTM RRC reconfiguration to the terminal device. The RRC reconfiguration carries the LTM configuration information.

S303: RRC reconfiguration complete.

After the network device configures the LTM configuration information, the RRC reconfiguration complete is sent to the network device.

In this embodiment of this application, S301 to S303 are the LTM preparation phase.

S304a: DL synchronization with a candidate cell.

The terminal device and the network device perform DL (Down Link, downlink) synchronization with the candidate cell.

S304b: UL synchronization with a candidate cell.

The terminal device and the network device perform DL (Down Link, downlink) synchronization with the candidate cell.

In this embodiment of this application, S304a and S304b are the early synchronization phase.

S305: L1 measurement information.

The terminal device sends the L1 measurement information to the network device Information.

S306: Cell switch command.

After receiving the L1 measurement information, the network device makes an LTM decision, and then sends the cell switch command to the terminal device, to instruct the terminal device to perform cell switch.

Further, after receiving the cell switch command, the terminal device detaches from a source serving cell and switches to a target serving cell.

S307: Random access channel procedure.

The RACH (Random Access Channel, random access channel) procedure is performed between the terminal device and the network device.

In this embodiment of this application, S305 to S307 are the LTM cell switch execution phase.

S308: LTM cell switch completion.

The LTM cell switch completion procedure is performed between the terminal device and the network device.

In this embodiment of this application, S308 is the LTM cell switch completion phase.

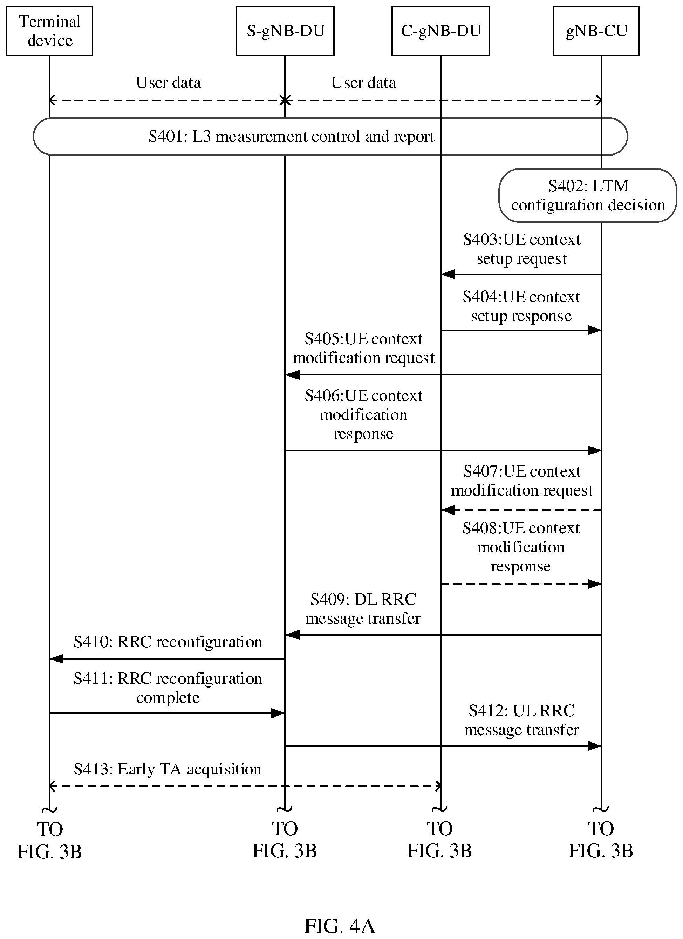

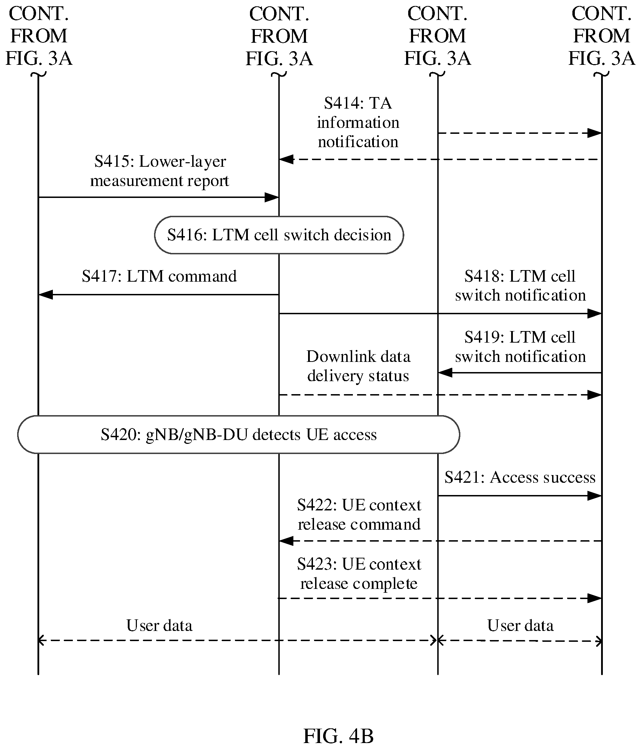

Specifically, FIG. 4A and FIG. 4B are a complete flowchart of LTM-based cell switch. In FIG. 4A and FIG. 4B, there are an S-gNB-DU (Source-gNB-Distributed Unit, source-base station-distributed unit), a C-gNB-DU (Candidate-gNB-Distributed Unit, candidate-base station-distributed unit), and a gNB-CU (gNB-Central Unit, base station-central unit). FIG. 4A and FIG. 4B specifically include the following steps.

S401: L3 measurement control and report.

In a current state, user data transmission is performed between a terminal device and the S-gNB-DU, and user data transmission is performed between the S-gNB-DU and the-gNB-CU. The L3 (network layer) measurement control and report are transmitted between the terminal device, S-gNB-DU, C-gNB-DU, and gNB-CU.

S402: LTM configuration decision.

The gNB-CU makes the LTM configuration decision.

S403: UE context setup request.

The gNB-CU sends the UE context setup request to the C-gNB-DU.

S404: UE context setup response.

The C-gNB-DU sends the UE context setup response to the gNB-CU.

S405: UE context modification request.

The gNB-CU sends the UE context modification request to the S-gNB-DU.

S406: UE context modification response.

The S-gNB-DU sends the UE context modification response to the gNB-CU.

S407: UE context modification request.

The gNB-CU sends the UE context modification request to the C-gNB-DU.

S408: UE context modification response.

The C-gNB-DU sends the UE context modification response to the gNB-CU.

S409: DL RRC message transfer.

The gNB-CU sends the DL RRC message transfer to the S-gNB-DU. The DL RRC message transfer carries RRC reconfiguration.

S410: RRC reconfiguration.

The S-gNB-DU sends the RRC reconfiguration to the terminal device. The RRC reconfiguration carries LTM configuration information.

S411: RRC reconfiguration complete.

The terminal device sends the RRC reconfiguration complete to the S-gNB-DU.

S412: UL RRC message transfer.

The S-gNB-DU sends the UL RRC message transfer to the gNB-CU. The UL RRC message transfer carries the RRC reconfiguration complete.

S413: Early TA acquisition.

Early TA (Tracking Area, tracking area) acquisition is performed between the network device and the C-gNB-DU.

S414: TA information notification.

The C-gNB-DU sends the TA information notification to the S-gNB-DU through the gNB-CU, where the TA information notification carries TA information.

S415: Lower-layer measurement report.

The network device sends the lower-layer measurement report to the S-gNB-DU.

S416: LTM cell switch decision.

The S-gNB-DU makes the LTM cell switch decision based on the lower-layer measurement report.

S417: LTM command.

The S-gNB-DU sends the LTM command to the terminal device.

S418: LTM cell switch notification.

The S-gNB-DU sends the LTM cell switch notification to the gNB-CU. The LTM cell switch notification carries a target cell ID and information about a selected beam.

S419: LTM cell switch notification.

The gNB-CU sends the LTM cell switch notification to the C-gNB-DU, where the LTM cell switch notification carries the target cell ID and the information about the selected beam.

S420: gNB/gNB-DU detects UE access.

After the S-gNB-DU sends a downlink data transmission status to the gNB-CU, the network device, the S-gNB-DU, and the C-gNB-DU negotiate detection of terminal device access by a gNB/gNB DU. S420 is a to-be-determined step.

S421: Access success.

The C-gNB-DU sends the access success to the gNB-CU.

S422: UE context release command.

The gNB-CU sends the UE context release command to the S-gNB-DU.

S423: UE context release complete.

The S-gNB-DU sends the UE context release complete to the gNB-CU.

Further, after the cell switch of the terminal device is completed, the C-gNB-DU provides a service for the terminal device, and user data transmission is performed between the terminal device and the C-gNB-DU. User data transmission is performed between the C-gNB-DU and the gNB-CU.

A provision in the prior art specifies that, when UE transitions to an RRC_INACTIVE state, the UE releases corresponding LTM configuration configuration information. In addition, another provision specifies that for a cell group that triggers an LTM configuration information release procedure, the UE shall remove all entries from VarLTM-Config (an LTM configuration variable), remove all entries from VarLTM ServingCellNoResetID (an LTM serving cell no-reset ID variable), remove all entries from VarLTM-ServingCellUE-MeasuredTA-ID (LTM serving cell UE measurement TA ID), release LTM configuration information, and release all entries of LTMCSIReportConfigToAddModList of all serving cells from a current UE configuration. It may be understood that, in a conventional technology, when the terminal device transitions to RRC_INACTIVE, the terminal device releases LTM configuration information. This results in a need to transmit LTM configuration information again to the terminal device when the terminal device transitions from RRC_INACTIVE to RRC_CONNECTED or when the terminal device performs cell switch. Consequently, downlink signaling overheads are high, the terminal needs to be reconfigured with new LTM configuration information, and state transition causes interruption to data transmission and handover.

In view of this, an embodiment of this application provides a wireless communication configuration method, and a main inventive idea thereof is as follows: Indication information is obtained, and upon transition to RRC_INACTIVE based on the indication information, L1/L2-triggered mobility configuration information is stored. Thereby, if subsequently a terminal device still performs access in a current serving cell or a serving cell corresponding to the LTM configuration information, the terminal device may indicate to a network device and continue to use the LTM configuration information. Consequently, downlink signaling overheads are reduced, interruption caused by state transition to data transmission and handover is reduced, and user experience is improved.

The following describes the technical solutions of this application in detail with reference to specific embodiments. It should be noted that the following embodiments may exist alone or may be combined with each other. For same or similar content, such as explanations of terms or concepts and explanations of steps, reference may be made to each other among different embodiments, and details are not described herein again.

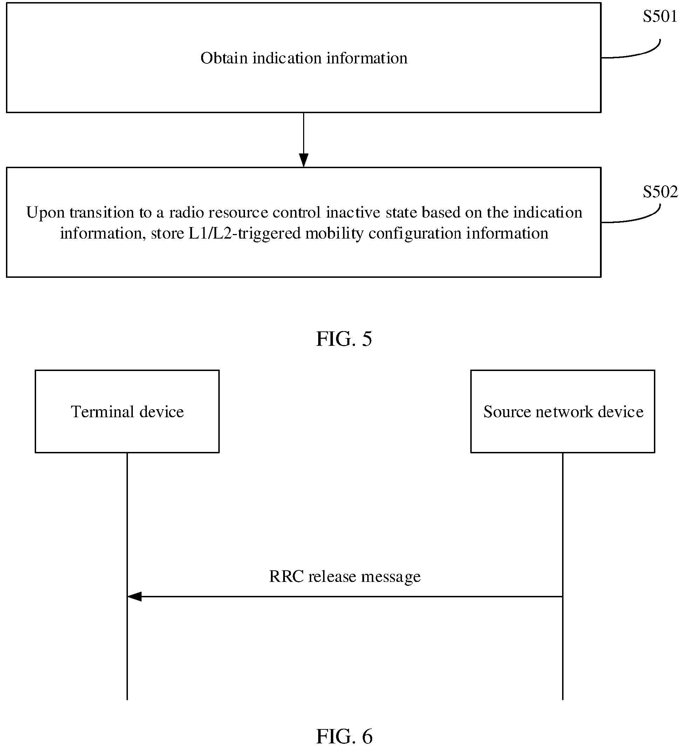

FIG. 5 is a diagram 1 of a wireless communication configuration method according to an embodiment of this application. As shown in FIG. 5, the wireless communication configuration method provided in this embodiment is applied to a terminal device, and the wireless communication configuration method includes the following steps.

S501: Obtain indication information.

The indication information is carried in a radio resource control release message (RRC release message). With reference to FIG. 6, a source network device sends an RRC release message to the terminal device, where the RRC release message carries an indication message, and the indication message indicates the terminal device to transition from RRC_CONNECTED to RRC_INACTIVE, and store LTM configuration information previously sent by the source network device.

Further, the radio resource control release message carries at least one of the following: a timer, a cell identity of a valid cell, and a radio notification area list of a validity area; the timer indicates a validity time of the LTM configuration information; and both the cell identity of the valid cell and the radio notification area (Radio Notification Area, RNA) list of the validity area indicate an applicable cell of the LTM configuration information.

Specifically, the timer indicates the validity time of the stored LTM configuration information. For example, if the timer is set to 1 hour, the stored LTM configuration information is valid within 1 hour, and the terminal device clears the stored LTM configuration information upon expiry of the timer. In addition, the cell identity of the valid cell indicates the applicable cell of the stored LTM configuration information. For example, if cell identities are cell 1, cell 3, and cell 5, the terminal device can use the stored LTM configuration information only when the terminal device accesses the cell 1, the cell 3, and the cell 5, and cannot use the stored LTM configuration information in cells other than the cell 1, the cell 3, and the cell 5. In addition, upon leaving these valid cells, the terminal device removes the stored LTM configuration information. The radio notification area list includes a plurality of RNAs. The LTM configuration information is applicable only when an accessed cell is within the plurality of RNAs.

If the radio resource control release message carries the timer, the terminal device starts the timer upon reception of the radio resource control release message.

Further, before the timer expires, if the terminal device performs access in a first serving cell, or a cell accessed by the terminal device is a candidate cell in the LTM configuration information, the terminal device may perform related configuration based on the LTM configuration information.

S502: Upon transition to a radio resource control inactive state based on the indication information, store L1/L2-triggered mobility configuration information.

It may be understood that, when the terminal device transitions to a second serving cell, the second serving cell is a candidate cell in the LTM configuration information, the second serving cell is a valid cell and/or is in a valid RNA region, and the time specified by the timer is met, the terminal device may perform corresponding measurement based on the LTM configuration information in advance, and notify a network device that the terminal device has stored the LTM configuration information.

In this embodiment of this application, the source network device transmits the RRC release (RRC release) message to the terminal device. The RRC release message indicates the terminal device to transition to the RRC_INACTIVE state and store LTM configuration information in a VarLTM-Config variable.

The LTM configuration information includes configuration information of the first serving cell and configuration information of each candidate cell of the first serving cell, and the first serving cell is a serving cell in which the LTM configuration information is stored.

It may be understood that, each candidate cell is a neighboring cell of the first serving cell, and is a cell to which the terminal device may be handed over. Further, the configuration information of the candidate cell includes at least one of the following: L1 or L2 measurement information, channel resource information, user plane bearer information, control plane bearer information, and information for early acquisition of uplink or downlink synchronization.

Specifically, the L1 or L2 measurement information includes one or more of the following: whether a target cell measurement for L1 measurement by the UE is based on a CSI-RS (Channel State Information-Reference Signal, channel state information-reference signal) or an SSB (Synchronization Signal Block, synchronization signal block) reference signal, a time-frequency resource of a reference signal, a TCI state, a measurement reporting periodicity, a CSI reporting resource, a quantity of cells to report, and a quantity of reference signals to report. The channel resource information includes one or more of the following: physical channel time-frequency resources and parameter configurations of a PDCCH (Physical Downlink Control Channel, physical downlink control channel), a PUCCH (Physical Uplink Control Channel, physical uplink control channel), a PDSCH (Physical Downlink Shared Channel, physical downlink shared channel), a PUSCH (Physical Uplink Shared Channel, physical uplink shared channel) for uplink and downlink transmission after completion of future handover. The user plane bearer information includes one or more of the following: parameter configurations of protocol stacks at respective layers {PDCP (Packet Data Convergence Protoco, packet data convergence protocol), RLC (Radio Link Control, radio link control protocol), MAC (Multiple Access Control, multiple access control protocol)} corresponding to a DRB (Data Radio Bearer, data radio bearer), and parameter configurations of a logical channel and a transport channel. The control plane bearer information includes one or more of the following: a corresponding SRB (Signalling radio bearer, signaling radio bearer) parameter and parameter configurations of protocol stacks at respective layers (PDCP/RLC/MAC), and parameter configurations of a logical channel and a transport channel. The information for early acquisition of uplink or downlink synchronization includes one or more of the following: frequency information of a target cell with which synchronization is to be acquired, RACH (Random Access Channel, random access channel) access channel configuration information, a BWP (Bandwidth Part, bandwidth part) parameter, a mapping between an SSB and a PRACH (Physical Random Access Channel, physical random access channel), and a TA (Tracking Area, tracking area) offset.

In this embodiment of this application, the source network device implements the LTM configuration information via an "LTM-Config" IE (LTM-configuration information element) and an "LTM CSI (Channel State Information, channel state information) report config" (LTM channel state information configuration report). The LTM configuration information includes the configuration information (LTM-ReferenceConfiguration-r18) of the first serving cell and the configuration information (LTM-Candidate-r18) of the candidate cell. Further, the configuration information of the candidate cell includes RS (Reference Signal, reference signal) configuration information (LTM-SSB-Config-r18), TCI (Transmission Control Interface, control transmission interface) state configuration information, and early RACH (Early Random Access Channel, early random access channel) configuration information (LTM-EarlyUL-Sync Config).

Further, the network device may perform operations such as addition, modification, and release on the LTM configuration information by configuring parameters LTM-CandidateToAddModList (a modification list for LTM candidate cell addition) and LTM-CandidateToReleaseList (an LTM candidate cell release list).

Specifically, the configuration information of the candidate cell includes: configuration information for L1 or L2 measurement reporting by UE, and configuration information for early uplink synchronization by the UE. The configuration information for L1 or L2 measurement reporting by the UE includes: a reporting periodicity, a CSI (Channel State Information, channel state information) reporting resource, a quantity of cells to report, and a quantity of reference signals to report.

In addition, the configuration information of the candidate cell further includes at least one of the following: channel resource information, user plane bearer information, control plane bearer information, and information for early acquisition of downlink synchronization.

Further, the configuration information for early uplink synchronization (EarlyUL-SyncConfig) is used to configure a random access resource for an early UL synchronization procedure. In addition, the LTM configuration information further includes: a candidate cell identity, a location of an SSB (Synchronization Signal/PBCH Block, synchronization signal/PBCH block), a physical cell identity, a TCI (Transmission Control Interface, control transmission interface) state, and a measurement configuration of UE (terminal device).

In this embodiment of this application, the method further includes: sending first information to the network device, where the first information indicates that the LTM configuration information is available.

Specifically, the first information notifies an accessed network device (which may be the source network device or a target network device different from the source network device) that the terminal device stores the LTM configuration information.

The first information includes a terminal device identifier and/or a candidate cell identity, and the candidate cell identity is a cell identity of a candidate cell in the LTM configuration information.

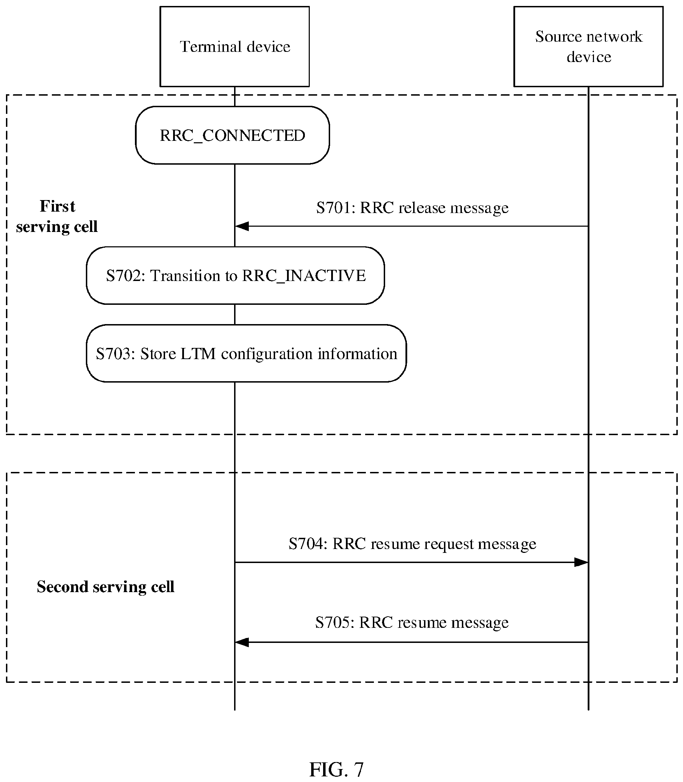

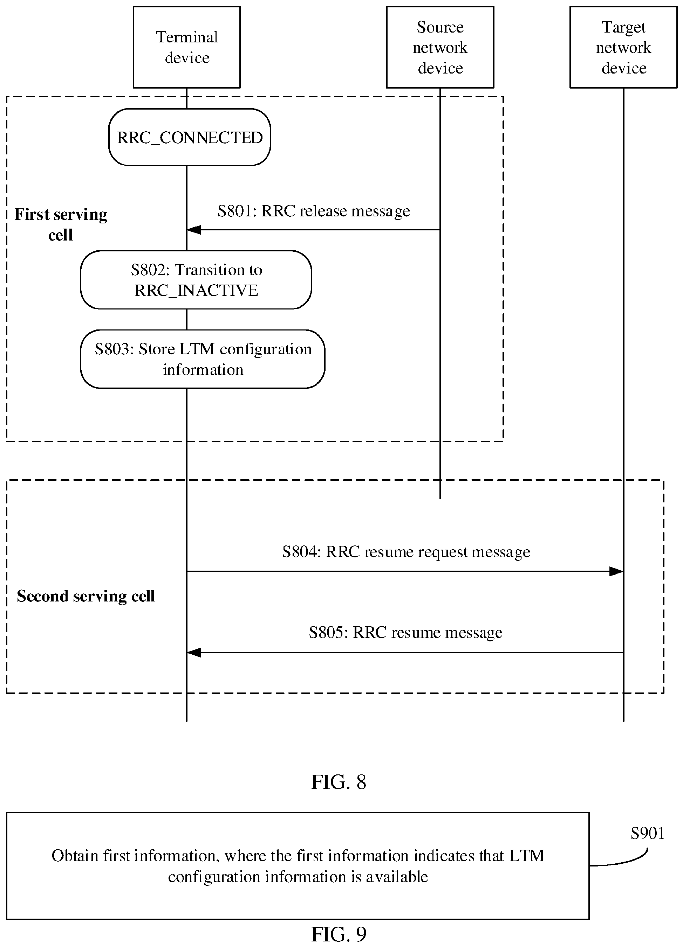

Further, the first information is carried in a radio resource control resume request message. With reference to FIG. 7 and FIG. 8, the RRC resume request message carries the first information.

In addition, if the terminal device needs to update the RNA, the terminal device sends an RNAU (RAN-based Notification Area Update, RAN-based notification area update) message to the network device, and includes the first information in the RNAU message to indicate to the network device that the terminal device has stored the LTM configuration information.

In this embodiment of this application, the first serving cell in which the LTM configuration information is stored is the same as a second serving cell in which the first information is sent; or the first serving cell in which the LTM configuration information is stored is different from a second serving cell in which the first information is sent.

Further, the second serving cell is a candidate cell in the L1/L2-triggered mobility configuration information, and sending the first information to the network device includes: under a preset condition, applying the L1/L2-triggered mobility configuration information, and sending the first information to the network device, where the preset condition includes: a current time meets a time specified by the timer, and/or the second serving cell is a valid cell.

It may be understood that, within a validity time specified by the timer and under the condition that the second serving cell matches the cell identity of the valid cell and the radio notification area (Radio Notification Area, RNA) list of the validity area, the terminal device may directly apply the stored LTM configuration information, and sending the first information to the network device can reduce a handover latency.

In addition, the method further includes: obtaining second information, where the second information indicates a handling manner of the LTM configuration information; and performing corresponding handling on the LTM configuration information according to the handling manner.

The second information is carried in an RRC resume message.

For example, with reference to FIG. 7, the terminal device sends the RRC resume request message to the source network device in the second serving cell, where the RRC resume request message carries the first information. The second serving cell and the first serving cell are the same cell or different cells, and the second serving cell is a cell served by the source network device. FIG. 7 specifically includes the following steps.

S701: RRC release message.

When the terminal device is in the first serving cell, S701 to S703 are performed.

In this embodiment of this application, when the terminal device is in RRC_CONNECTED, the terminal device receives the RRC release message sent by the source network device. The RRC release message indicates the terminal device to transition to an RRC_INACTIVE state and store LTM configuration information in a VarLTM-Config variable.

S702: Transition to RRC_INACTIVE.

The terminal device transitions from RRC_CONNECTED to RRC_INACTIVE according to the indication of the RRC release message.

S703: Store LTM configuration information.

The terminal device stores the LTM configuration information according to the indication of the RRC release message.

S704: RRC resume request message.

In an optional embodiment, when the terminal device performs access in a current cell (the second serving cell and the first serving cell are the same cell) or another cell served by the same source network device (the second serving cell and the first serving cell are not the same cell), the terminal device sends the RRC resume request message to the source network device. The RRC resume request message carries first information, and the first information indicates that the LTM configuration information is available, that is, the terminal device has stored the LTM configuration information. The first information includes a terminal device identifier and/or a candidate cell identity, and the candidate cell identity is a cell identity of a candidate cell in the LTM configuration information.

S705: RRC resume message.

The terminal device receives the RRC resume message sent by the source network device, where the RRC resume message carries second information. Further, the second information indicates a handling manner of the LTM configuration information, and the terminal device may perform corresponding handling on the LTM configuration information according to the handling manner.

In FIG. 7, the second serving cell and the first serving cell correspond to a same network device, namely, the source network device.

In an optional embodiment, with reference to FIG. 8, the terminal device sends the RRC resume request message to the target network device in the second serving cell, where the second serving cell is cell served by the target network device, and the RRC resume request message carries the first information. The second serving cell and the first serving cell are different cells, and the target network device is different from the source network device. FIG. 8 specifically includes the following steps.

S801: RRC release message.

S802: Transition to RRC_INACTIVE.

S803: Store LTM configuration information.

For S801 to S803, refer to S701 to S703. Details are not described herein again.

S804: RRC resume request message.

S805: RRC resume message.

S804 and S805 are interaction between the terminal device and the target network device. For other content, refer to S704 and S705. Details are not described herein again.

Further, in this embodiment of this application, a handling manner includes one of the following: retaining the LTM configuration information, removing the LTM configuration information, updating the LTM configuration information, or adding the LTM configuration information.

Specifically, retaining the LTM configuration information means that if the LTM configuration information is available, the terminal device may retain the LTM configuration information; removing the LTM configuration information means that if the LTM configuration information is unavailable, the stored LTM configuration information is removed and new LTM configuration information is reconfigured; updating the LTM configuration information means that if a part of the LTM configuration information stored in the terminal device is available and a part of the LTM configuration information stored in the terminal device is unavailable, the available part of the LTM configuration information is retained and the unavailable part of the LTM configuration information is replaced; and adding the LTM configuration information means that configuration information of some candidate cells is added to the original LTM configuration information.

In this embodiment of this application, the terminal device may perform measurement in advance based on the LTM configuration information to obtain a measurement report, and may send the measurement report to the network device when state transition of the terminal device occurs (for example, transition from RRC_INACTIVE to RRC_CONNECTED). In this way, mobility performance of the terminal device after state transition can be quickly ensured, and a larger interruption delay caused by the state transition of the terminal device is reduced.

In this application, the LTM configuration information is stored rather than removed upon transition to RRC_INACTIVE. Thereby, if subsequently the terminal device still performs access in a candidate cell corresponding to the LTM configuration information, the terminal device may indicate to the network device and continue to use the LTM configuration information. Consequently, downlink signaling overheads are reduced, interruption caused by state transition to data transmission and handover is reduced, and user experience is improved.

FIG. 9 shows a wireless communication configuration method, applied to a network device. The method includes the following steps.

S901: Obtain first information, where the first information indicates that LTM configuration information is available.

The first information is carried in an RRC resume request message.

Further, the first information includes a terminal device identifier and/or a candidate cell identity, and the candidate cell identity is a cell identity of a candidate cell in the LTM configuration information.

The method further includes: obtaining the LTM configuration information based on the terminal device identifier and/or the candidate cell identity; and determining a handling manner of the LTM configuration information, and indicating second information, where the second information indicates the handling manner of the LTM configuration information.

In this embodiment of this application, obtaining the LTM configuration information includes: obtaining the LTM configuration information from a source network device, where the source network device is a network device at a time when the terminal device obtains the LTM configuration information.

In an optional embodiment, determining the handling manner of the LTM configuration information includes: obtain resource usage of a second serving cell and a neighboring cell of the second serving cell, where the second serving cell is a cell currently accessed by the terminal device; obtaining a measurement report carried in the radio resource control resume request message; and determining the handling manner of the LTM configuration information based on the resource usage and the measurement report.

Further, the handling manner includes one of the following: retaining the LTM configuration information, removing the LTM configuration information, updating the LTM configuration information, or adding the LTM configuration information.

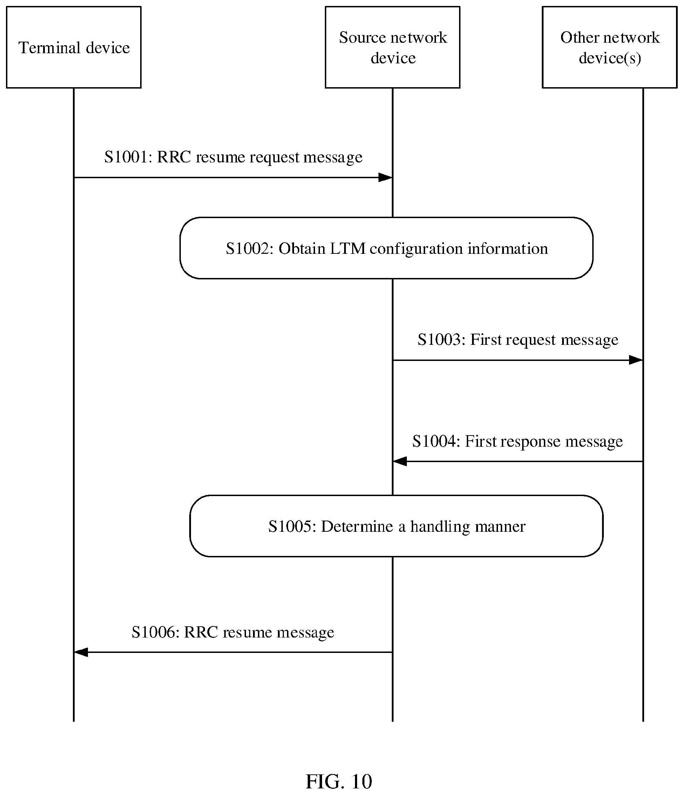

For example, when S901 is performed by the source network device, with reference to FIG. 10, in FIG. 10, the terminal device performs access in the first serving cell in which the LTM configuration information is stored (that is, a case in which the second serving cell and the first serving cell are the same cell). The interaction procedure includes the following steps.

S1001: RRC resume request message.

The source network device receives the RRC resume request message from the terminal device, where the RRC resume request message carries first information, and the first information includes a terminal device identifier and/or a candidate cell identity.

S1002: Obtain LTM configuration information.

The source network device obtains the corresponding LTM configuration information locally (that is, from the source network device) based on the terminal device identifier and/or the candidate cell identity.

S1003: First request message.

Another network device is a network device corresponding to a candidate cell in the LTM configuration information. The source network device sends the first request message to the another network device. That is, the candidate cell is managed by the another network device, and the another network device may determine, based on resource usage of the candidate cell, whether to reserve corresponding preconfigured resource information or update a configured resource.

The first request message is used to request the another network device to determine validity information of the candidate cell; and the validity information includes at least one of the following: a cell identity of a candidate cell whose configuration information is valid, a cell identity of a candidate cell whose configuration information is unavailable, and a cell identity of a candidate cell whose configuration information needs to be updated that are in the LTM configuration information.

S1004: First response message.

The source network device receives the first response message sent by the another network device, where the first response message carries the validity information.

S1005: Determine a handling manner.

First, the source network device updates the LTM configuration information based on the validity information, to obtain updated LTM configuration information. A specific update manner is: if the validity information indicates that configuration information of the candidate cell is unavailable, removing the configuration information of the candidate cell from the LTM configuration information; or if the validity information indicates that configuration information of the candidate cell is valid, retaining the configuration information of the candidate cell in the LTM configuration information; or if the validity information indicates that configuration information of the candidate cell needs to be updated, retaining the configuration information of the candidate cell in the LTM configuration information or removing the configuration information of the candidate cell from the LTM configuration information.

In addition, the source network device further obtains resource usage of the second serving cell and a neighboring cell of the second serving cell, where the second serving cell is the cell currently accessed by the terminal device; obtains a measurement report carried in the radio resource control resume request message; and determines the handling manner of the LTM configuration information based on the resource usage and the measurement report.

Specifically, the resource usage includes physical resource usage, user load, and processing resource capability. The source network device determines, based on the resource usage, whether a resource of the candidate cell in the LTM configuration information can continue to be reserved for a target user.

S1006: RRC resume message.

Then, the source network device sends the RRC resume message to the terminal device, where the RRC resume message carries second information, and the second information indicates the handling manner of the terminal device for the LTM configuration information.

Specifically, the second information may be 1-bit indication information. If the indication information is 0, it indicates to remove the LTM configuration information; or if the indication information is 1, it indicates to retain the LTM configuration information. Alternatively, the second information may be 2-bit indication information 2 bits. If the indication information is 00, it indicates removal; or if the indication information is 01, it indicates subsequent reconfiguration (update); or if the indication information is 11, it indicates retaining or to send a new set of LTM configuration information. With the candidate cell identity used as an index: If a newly configured candidate cell identity is consistent with an identity in the previously retained configuration information of the candidate cell, it is checked whether there is new configuration information. If there is new configuration information, the new configuration information is retained and overwrites the original configuration. If there is no new configuration information, the original configuration information continues to be stored. If a candidate cell identity that is not previously stored exists in a candidate cell identity in the new configuration information, the new configuration information is stored. If a previously stored candidate cell does not exist in the candidate cell identity in the new configuration information, configuration information corresponding to the candidate cell is removed.

FIG. 10 shows interaction between the source network device and the terminal device, where the source network device updates the LTM configuration information, and determines the handling manner of the LTM configuration information.

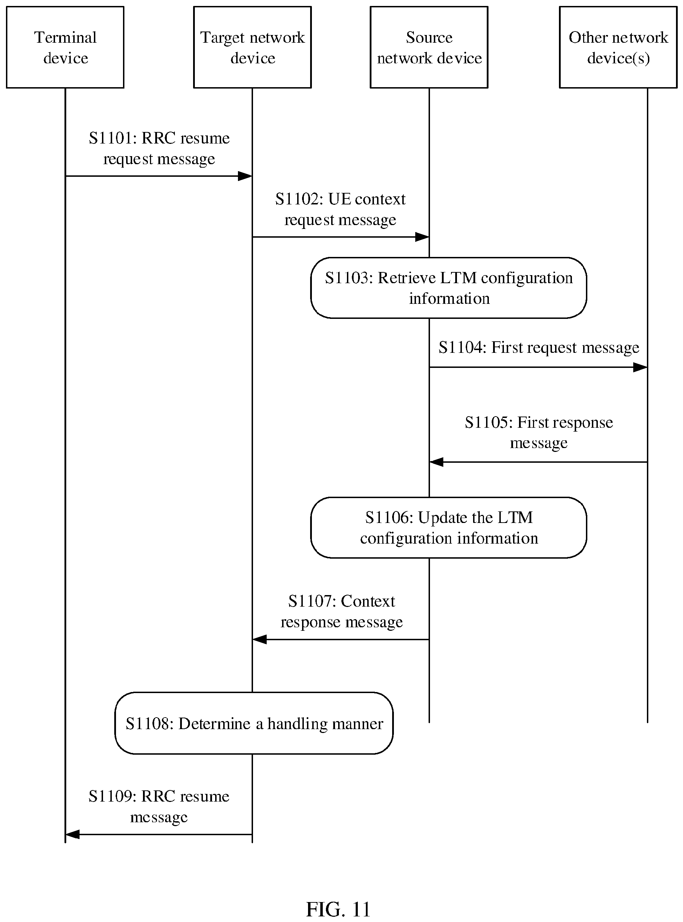

For another example, when S901 is performed by the target network device, with reference to FIG. 11, the following steps are included.

S1101: RRC resume request message.

The target network device receives the RRC resume request message from the terminal device, where the RRC resume request message carries first information, and the first information includes a terminal device identifier and/or a candidate cell identity.

S1102: UE context request message.

The target network device determines the source network device based on the terminal device identifier and/or the candidate cell identity, and then sends the context request message to the source network device, to obtain LTM configuration information. The context request message may carry the terminal device identifier and/or the candidate cell identity.

S1103: Retrieve LTM configuration information.

The source network device retrieves the corresponding LTM configuration information from the source network device based on the terminal device identifier and/or the candidate cell identity.

S1104: First request message.

Another network device is a network device corresponding to a candidate cell in the LTM configuration information. The source network device sends the first request message to the another network device, and the source network device sends the first request message to the another network device, where the first request message is used to request the another network device to determine validity information of the candidate cell, and the validity information includes: whether the configuration information of the candidate cell is valid, and whether update or removal is required if the configuration information of the candidate cell is not valid.

S1105: First response message.

The source network device receives the first response message sent by the another network device, where the first response message carries the validity information.

S1106: Update the LTM configuration information.

The source network device updates the LTM configuration information based on the validity information, to obtain updated LTM configuration information. A specific update manner is: if the validity information indicates that configuration information of the candidate cell is unavailable, removing the configuration information of the candidate cell from the LTM configuration information; or if the validity information indicates that configuration information of the candidate cell is valid, retaining the configuration information of the candidate cell in the LTM configuration information; or if the validity information indicates that configuration information of the candidate cell needs to be updated, retaining in the LTM configuration information.

That the source network device updates the LTM configuration information further includes: adding configuration information of a candidate cell to the LTM configuration information based on a second serving cell and neighboring cell information of the second serving cell, where the second serving cell is a cell currently accessed by the terminal device.

It may be understood that the added configuration information of the candidate cell is configuration information of a candidate cell that is not included in the original LTM configuration information. For example, for example, the terminal device has already stored configuration information of candidate cells corresponding to cell 1, cell 2, cell 3, and cell 4, and further needs to configure cell 5 and cell 6 as neighboring cells of the second serving cell in which the terminal device is located, where configuration information of the cell 5 may be added as configuration information of a candidate cell.

S1107: UE context response message.

The source network device sends the context response message to the target network device, where the context response message carries the LTM configuration information and the validity information.

S1108: Determine a handling manner.

The target network device determines a handling manner of the LTM configuration information based on the LTM configuration information, resource usage, and a measurement report.

S1109: RRC resume message.

Then, the target network device sends the RRC resume message to the terminal device, where the RRC resume message carries second information, and the second information indicates the handling manner of the terminal device for the LTM configuration information.

FIG. 11 shows interaction between the target network device and the terminal device, where the source network device updates the LTM configuration information, and the target network device determines the handling manner of the LTM configuration information.

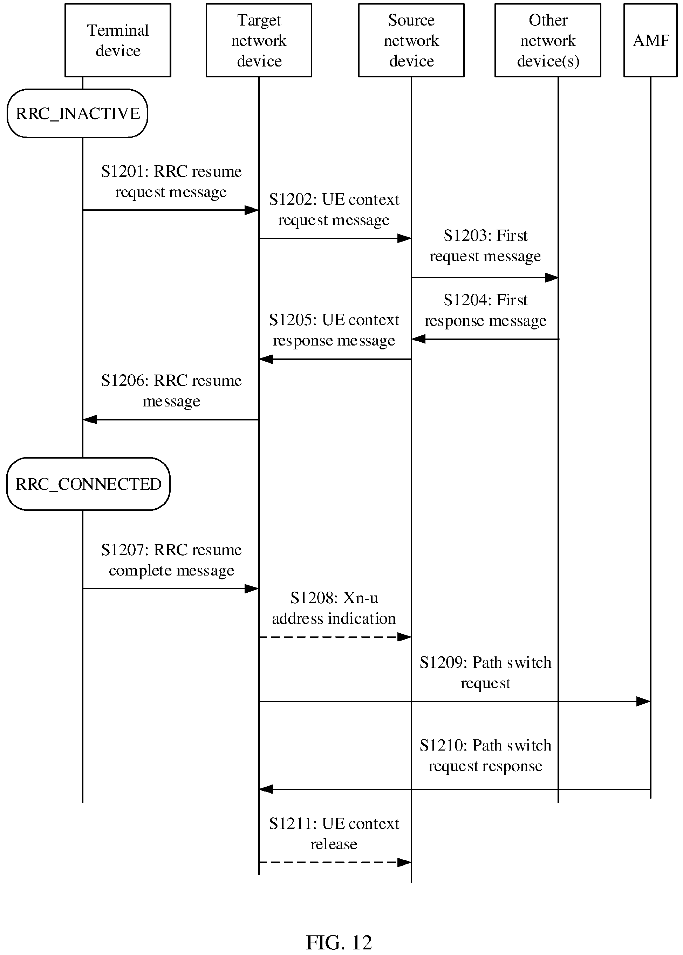

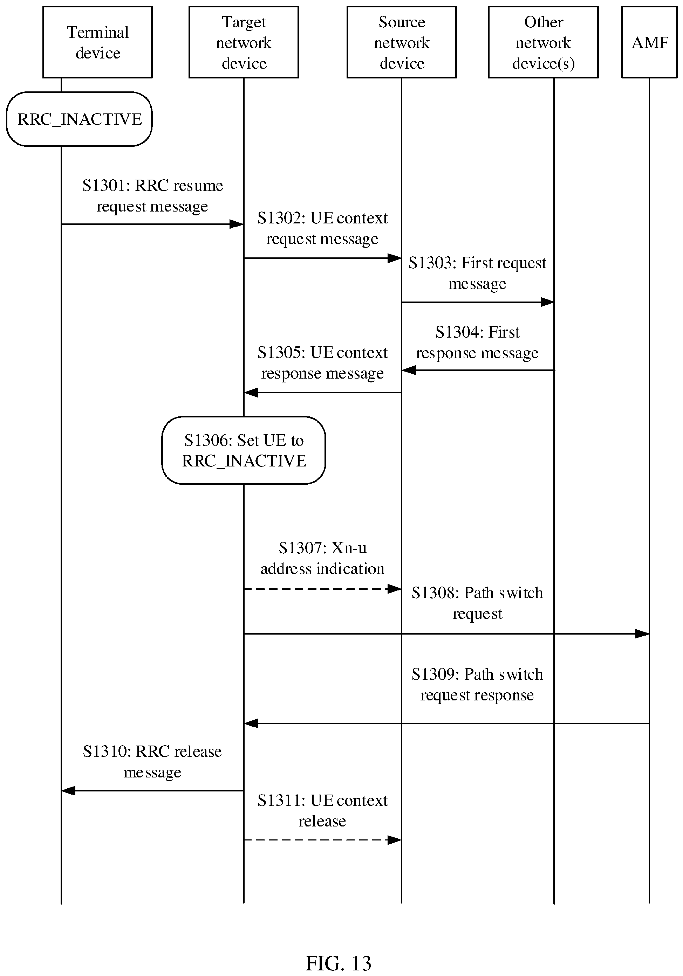

In an embodiment, when S901 is performed by the target network device, there are two cases with reference to FIG. 12 and FIG. 13. FIG. 12 specifically includes the following steps.

S1201: RRC resume request message.

When the terminal device is in an RRC inactive state and there is data to be transmitted, the terminal device sends the RRC resume request message to the target network device.

S1202: UE context request message.

S1203: First request message.

S1204: First response message.

S1205: UE context response message.

S1206: RRC resume message.

For a specific implementation process of S1201 to S1206, refer to S1101 to S1109. Details are not described herein again.

S1207: RRC resume complete message.

After handling LTM configuration information, the terminal device transitions to RRC_CONNECTED, and then sends the RRC resume complete message to the target network device.

S1208: Xn-u address indication.

After receiving the radio resource resume complete message from the destination device, the target network device sends the Xn-u address indication to the source network device, to enable the source network device to connect to the AMF based on an Xn-u address.

S1209: Path switch request.

S1210: Path switch request response.

S1209 and S1210 implement path switch for data transmission.

S1211: UE context release.

The target network device sends the UE context release to the source network device, to instruct the source network device to release UE context.

When the terminal device performs RNA update, FIG. 13 specifically includes the following steps.

S1301: RRC resume request message.

S1302: UE context request message.

S1303: First request message.

S1304: First response message.

S1305: UE context response message.

For a specific implementation process of S1301 to S1305, refer to S1101 to S1107. Details are not described herein again.

S1306: Set UE to RRC_INACTIVE.

In FIG. 13, the terminal device sends the RRC resume request message to the target network device in the case of RNA update, and the terminal device does not need to perform data transmission. Therefore, the target network device sets the terminal device to the RRC inactive state.

S1307: Xn-u address indication.

S1308: Path switch request.

S1309: Path switch request response.

For S1307 to S1309, refer to S1208 to S1210. Details are not described herein again.

S1310: RRC release message.

In this embodiment of this application, the RRC release message carries a handling manner of LTM configuration information. After receiving the RRC release message, the terminal device handles the LTM configuration information according to the handling manner, for example, retains the LTM configuration information, or updates the LTM configuration information, or removes the stored LTM configuration information and then reconfigures new LTM configuration information.

Further, after receiving the RRC release message, the terminal device remains in the RRC inactive state.

S1311: UE context release.

In an optional embodiment, if the terminal device needs to update an RNA, for example, needs to update the RNA when a timer has not expired or the RNA changes, the first information is carried in an RNAU (based Notification Area Update, RAN-based notification area update) message, and the terminal device sends the RNAU message to the target network device, to notify the target network device that the terminal device has stored the LTM configuration information. The target network device may optionally update or remove the LTM configuration information.

Further, upon transition to RRC_IDLE, the terminal device removes the LTM configuration information.

In this embodiment of this application, the LTM configuration information includes configuration information of a first serving cell and configuration information of each candidate cell of the first serving cell, and the first serving cell is a serving cell in which the LTM configuration information is stored.

Further, the configuration information of the candidate cell includes at least one of the following: L1 or L2 measurement information, channel resource information, user plane bearer information, control plane bearer information, and information for early acquisition of uplink or downlink synchronization.

In this application, the LTM configuration information is stored rather than removed upon transition to RRC_INACTIVE. Thereby, if subsequently the terminal device still performs access in a candidate cell corresponding to the LTM configuration information, the terminal device may indicate to the network device and continue to use the LTM configuration information. Consequently, downlink signaling overheads are reduced, interruption caused by state transition to data transmission and handover is reduced, and user experience is improved.

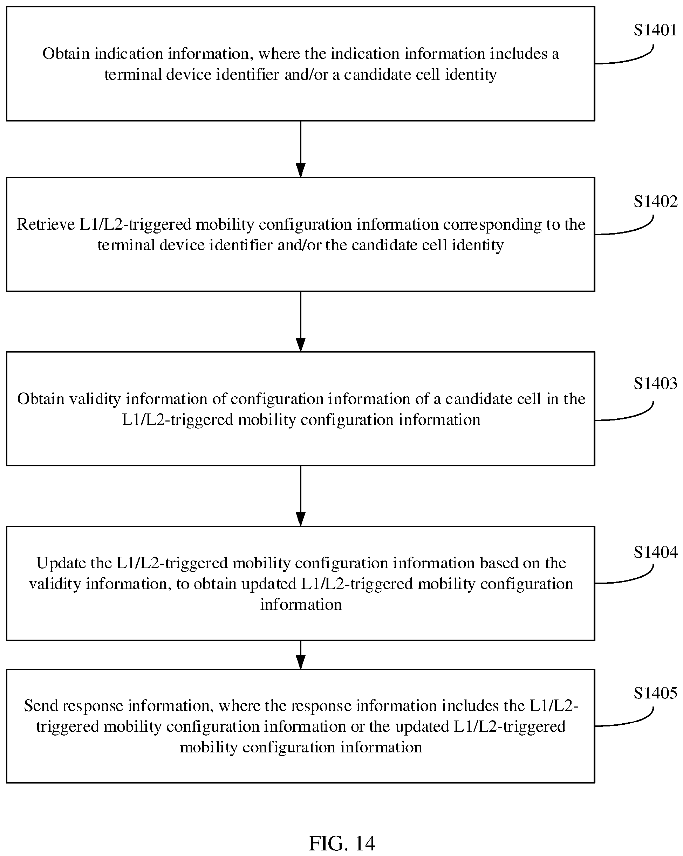

With reference to FIG. 14, a wireless communication configuration method is further provided. The wireless communication configuration method is performed by the source network device in the scenario in FIG. 11, and specifically includes the following steps.

S141: Obtain indication information, where the indication information includes a terminal device identifier and/or a candidate cell identity.

The indication information is carried in a terminal device context request message or another Xn interface message.

With reference to FIG. 11 and FIG. 12, the indication information is carried in the UE context request message sent by the target network device to the source network device. In addition, the indication information may alternatively be carried in an Xn interface message sent by the target network device to the source network device.

S142: Retrieve L1/L2-triggered mobility configuration information corresponding to the terminal device identifier and/or the candidate cell identity.

The source network device may retrieve the LTM configuration information from the source network device.

S143: Obtain validity information of configuration information of a candidate cell in the L1/L2-triggered mobility configuration information.

Specifically, obtaining the validity information of the configuration information of the candidate cell in the L1/L2-triggered mobility configuration information includes: sending a first request message to another network device corresponding to the candidate cell, where the first request message indicates the another network device to determine the validity information of the configuration information of the candidate cell; and obtain the validity information sent by the another network device.

Specifically, the source network device needs to determine the validity information of the configuration information of the candidate cell with another network device corresponding to the candidate cell, where the validity information includes validity of the configuration information of the candidate cell and whether update is required. Further, the configuration information of the candidate cell is a part of configuration information related to the candidate cell in the LTM configuration information.

For example, eight candidate cells are configured in the LTM configuration information, which are a candidate cell 1 to a candidate cell 8. A network device serving the candidate cell 1, the candidate cell 2, and the candidate cell 3 is another network device a. A network device serving the candidate cell 4, the candidate cell 5, and the candidate cell 6 is another network device b. A network device serving the candidate cell 7 and the candidate cell 8 is another network device c.

Further, the validity information includes at least one of the following: a cell identity of a candidate cell whose configuration information is valid, a cell representation of a candidate cell whose configuration information is unavailable, and a cell identity of a candidate cell whose configuration information needs to be updated that are in the LTM configuration information.

Specifically, with reference to FIG. 11 to FIG. 13, the source network device sends a first request message to the another network device a, where the first request message carries cell identities and configuration information of the candidate cell 1, the candidate cell 2, and the candidate cell 3, to enable the another network device a to determine validity information of each of the candidate cell 1, the candidate cell 2, and the candidate cell 3. The validity information is carried in a first response message returned to the source network device. The source network device sends a first request message to the another network device b, where the first request message carries cell identities and configuration information of the candidate cell 4, the candidate cell 5, and the candidate cell 6, to enable the another network device b to determine validity information of each of the candidate cell 4, the candidate cell 5, and the candidate cell 6. The validity information is carried in a first response message returned to the source network device. The source network device sends a first request message to the another network device c, where the first request message carries cell identities and configuration information of the candidate cell 7 and the candidate cell 8, to enable the another network device c to determine validity information of each of the candidate cell 7 and the candidate cell 8. The validity information is carried in a first response message returned to the source network device. Then, the source network device may obtain validity information of each candidate cell.

S144: Update the L1/L2-triggered mobility configuration information based on the validity information, to obtain updated L1/L2-triggered mobility configuration information.

In addition, in an optional embodiment, if the validity information indicates that configuration information of one of the candidate cells is unavailable, the source network device removes the configuration information of the candidate cell from the LTM configuration information, and records a cell identity of the candidate cell. For example, if the configuration information of the candidate cell 3 is unavailable, the source network device removes the configuration information of the candidate cell 3 from the LTM configuration information, and records the cell identity of the candidate cell 3.

In another optional embodiment, if the validity information indicates that configuration information of one of the candidate cells is valid, the source network device retains the configuration information of the candidate cell in the LTM configuration information. For example, if the configuration information of the candidate cell 1, the candidate cell 2, the candidate cell 5, and the candidate cell 7 is valid, the source network device retains the configuration information of the candidate cell 1, the candidate cell 2, the candidate cell 5, and the candidate cell 7 in the LTM configuration information.

In still another optional embodiment, if the validity information indicates that configuration information of one of the candidate cells needs to be updated, the source network device retains the configuration information of the candidate cell in the LTM configuration information, or removes the configuration information of the candidate cell from the LTM configuration information and records a cell identity of the removed candidate cell. For example, if the configuration information of the candidate cell 4, the candidate cell 6, and the candidate cell 8 needs to be updated, the source network device retains the configuration information of the candidate cell 4, the candidate cell 6, and the candidate cell 8 in the LTM configuration information, or removes the configuration information of the candidate cell 4, the candidate cell 6, and the candidate cell 8 in the LTM configuration information and records the cell identities of the removed candidate cell 4, candidate cell 6, and candidate cell 8.

In this embodiment of this application, if the configuration information of each candidate cell in the LTM configuration information is valid, it is determined that the LTM configuration information is valid and does not need to be updated; otherwise, the LTM configuration information is updated in the foregoing manner to obtain the updated LTM configuration information.

S145: Send response information, where the response information includes the L1/L2-triggered mobility configuration information or the updated L1/L2-triggered mobility configuration information.

In this embodiment of this application, if the LTM configuration information does not need to be updated, the response information includes the original LTM configuration information; or if the LTM configuration information needs to be updated, the response information includes the updated CHO configuration information.

The response information is carried in a terminal device context response message or another Xn interface message.

In this application, the LTM configuration information is stored rather than removed upon transition to RRC_INACTIVE. Thereby, if subsequently the terminal device still performs access in a candidate cell corresponding to the LTM configuration information, the terminal device may indicate to the network device and continue to use the LTM configuration information. Consequently, downlink signaling overheads are reduced, interruption caused by state transition to data transmission and handover is reduced, and user experience is improved.

For another specific implementation process of this embodiment, refer to the foregoing content. Details are not described herein again.

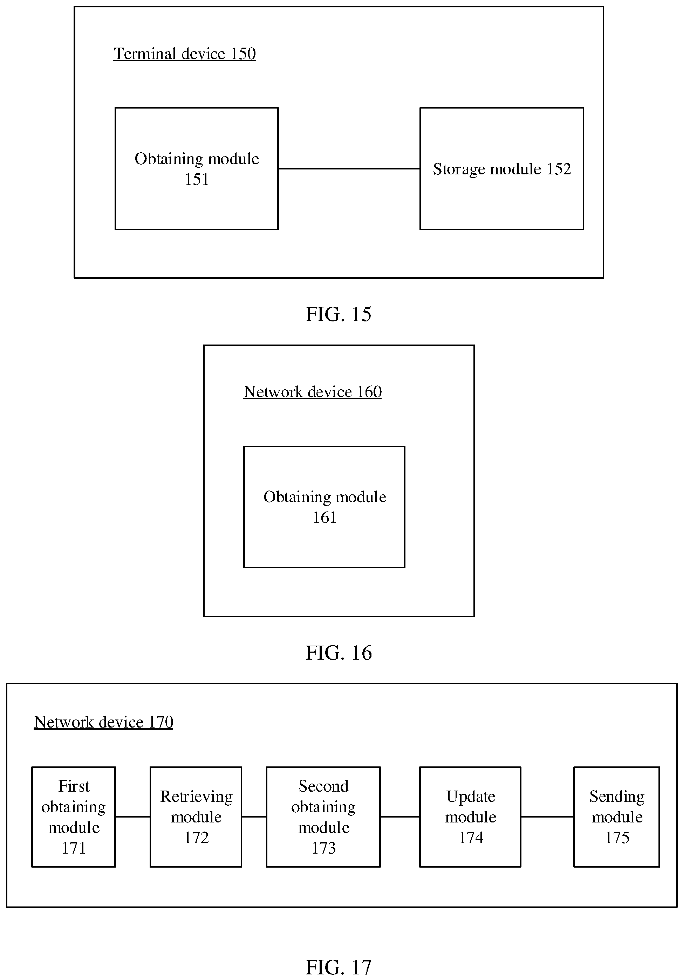

FIG. 15 is a diagram of a structure of a terminal device according to an embodiment of this application. As shown in FIG. 15, the terminal device 150 in this embodiment includes an obtaining module 151 and a storage module 152.

The obtaining module 151 is configured to obtain indication information.

The storage module 151 is configured to: upon transition to a radio resource control inactive state based on the indication information, storing L1/L2-triggered mobility configuration information.

In an optional embodiment, the indication information is carried in a radio resource control release message.

In an optional embodiment, the radio resource control release message carries at least one of the following: a timer, a cell identity of a valid cell, and a radio notification area list of a validity area; the timer indicates the L1/L2-triggered mobility configuration information; and both the cell identity of the valid cell and the radio notification area list of the validity area indicate an applicable cell of the L1/L2-triggered mobility configuration information.

In an optional embodiment, the L1/L2-triggered mobility configuration information includes configuration information of a first serving cell and configuration information of each candidate cell of the first serving cell, and the first serving cell is a serving cell in which the L1/L2-triggered mobility configuration information is stored.

In an optional embodiment of, the configuration information of the candidate cell includes at least one of the following: L1 or L2 measurement information, channel resource information, user plane bearer information, control plane bearer information, and information for early acquisition of uplink or downlink synchronization.

In an optional embodiment, the terminal device 150 further includes a sending module (not shown), configured to send first information to a network device, where the first information indicates that the L1/L2-triggered mobility configuration information is available.

In an optional embodiment, the first information includes a terminal device identifier and/or a candidate cell identity, and the candidate cell identity is a cell identity of a candidate cell in the L1/L2-triggered mobility configuration information.

In an optional embodiment, the first information is carried in a radio resource control resume request message.

In an optional embodiment, the first serving cell in which the L1/L2-triggered mobility configuration information is stored is the same as a second serving cell in which the first information is sent; or the first serving cell in which the L1/L2-triggered mobility configuration information is stored is different from a second serving cell in which the first information is sent.

In an optional embodiment, the second serving cell is a candidate cell in the L1/L2-triggered mobility configuration information, and the sending module is specifically configured to: under a preset condition, apply the L1/L2-triggered mobility configuration information, and send the first information to the network device, where the preset condition includes: a current time meets a time specified by the timer, and/or the second serving cell is a valid cell.

In an optional embodiment, the obtaining module 151 is further configured to obtain second information, where the second information indicates a handling manner of the L1/L2-triggered mobility configuration information; and the terminal device 150 further includes a handling module (not shown), configured to perform corresponding handling on the L1/L2-triggered mobility configuration information according to the handling manner.

In an optional embodiment, the handling manner includes one of the following: retaining the L1/L2-triggered mobility configuration information, removing the LTM configuration information, updating the L1/L2-triggered mobility configuration information, or adding the L1/L2-triggered mobility configuration information.

The terminal device provided in this embodiment is configured to implement the technical solutions of the terminal device in the foregoing method embodiments. Implementation principles and technical effects thereof are similar, and details are not described herein again.

FIG. 16 is a diagram of a structure of a network device according to an embodiment of this application. As shown in FIG. 16, the network device 160 in this embodiment includes an obtaining module 161, configured to obtain first information, where the first information indicates that LTM configuration information is available.

In an optional embodiment, the first information is carried in a radio resource control resume request message.

In an optional embodiment, the first information includes a terminal device identifier and/or a candidate cell identity, and the candidate cell identity is a cell identity of a candidate cell in the radio resource control configuration information.

In an optional embodiment, the obtaining module 161 is further configured to obtain the L1/L2-triggered mobility configuration information based on the terminal device identifier and/or the candidate cell identity; and the network device 160 further includes a determining module, configured to: determine a handling manner of the L1/L2-triggered mobility configuration information, and indicate second information, where the second information indicates the handling manner of the L1/L2-triggered mobility configuration information.

In an optional embodiment, the obtaining module 161 is specifically configured to: obtain the L1/L2-triggered mobility configuration information from a source network device, where the source network device is a serving network device that configures the L1/L2-triggered mobility configuration information for the terminal device.

In an optional embodiment, the determining module (not shown) is specifically configured to: obtain resource usage of a second serving cell and a neighboring cell of the second serving cell, where the second serving cell is a cell currently accessed by the terminal device; obtain a measurement report carried in the radio resource control resume request message; and determine the handling manner of the L1/L2-triggered mobility configuration information based on the resource usage and the measurement report.

In an optional embodiment, the handling manner includes one of the following: retaining the L1/L2-triggered mobility configuration information, removing the L1/L2-triggered mobility configuration information, updating the L1/L2-triggered mobility configuration information, or adding the L1/L2-triggered mobility configuration information.

The network device provided in this embodiment may be a core network device or an access network device, and is configured to implement the technical solutions of the core network device or the access network device in the foregoing method embodiments. Implementation principles and technical effects thereof are similar, and details are not described herein again.

FIG. 17 is a diagram of a structure of a network device according to an embodiment of this application. As shown in FIG. 17, the network device 170 in this embodiment includes:
a first obtaining module 171, configured to obtain indication information, where the indication information includes a terminal device identifier and/or a candidate cell identity;
a retrieving module 172, configured to retrieve L1/L2-triggered mobility configuration information corresponding to the terminal device identifier and/or the candidate cell identity;
a second obtaining module 173, configured to obtain validity information of configuration information of a candidate cell in the L1/L2-triggered mobility configuration information;
an update module 174, configured to update the L1/L2-triggered mobility configuration information based on the validity information, to obtain updated L1/L2-triggered mobility configuration information; and
a sending module 175, configured to send response information, where the response information includes the L1/L2-triggered mobility configuration information or the updated L1/L2-triggered mobility configuration information.

In an optional embodiment, the indication information is carried in a terminal device context request message or another Xn interface message.

In an optional embodiment, the response information is carried in a terminal device context response message or another Xn interface message.

In an optional embodiment, the second obtaining module 173 is specifically configured to: send a first request message to another network device corresponding to the candidate cell, where the first request message indicates the another network device to determine the validity information of the configuration information of the candidate cell; and obtain the validity information sent by the another network device.

In an optional embodiment, the validity information includes at least one of the following: a cell identity of a candidate cell whose configuration information is valid, a cell identity of a candidate cell whose configuration information is unavailable, and a cell identity of a candidate cell whose configuration information needs to be updated that are in the L1/L2-triggered mobility configuration information.

In an optional embodiment, the update module 174 is specifically configured to:
if the validity information indicates that the configuration information of the candidate cell is unavailable, remove the configuration information of the candidate cell from the L1/L2-triggered mobility configuration information; or
if the validity information indicates that the configuration information of the candidate cell is valid, retain the configuration information of the candidate cell in the L1/L2-triggered mobility configuration information; or
if the validity information indicates that the configuration information of the candidate cell needs to be updated, retain the configuration information of the candidate cell in the L1/L2-triggered mobility configuration information or remove the configuration information of the candidate cell from the L1/L2-triggered mobility configuration information.

In an optional embodiment, the update module 174 is further configured to add configuration information of a candidate cell to the L1/L2-triggered mobility configuration information based on a second serving cell and neighboring cell information of the second serving cell, where the second serving cell is a cell currently accessed by the terminal device.

The network device provided in this embodiment may be a core network device or an access network device, and is configured to implement the technical solutions of the core network device or the access network device in the foregoing method embodiments. Implementation principles and technical effects thereof are similar, and details are not described herein again.

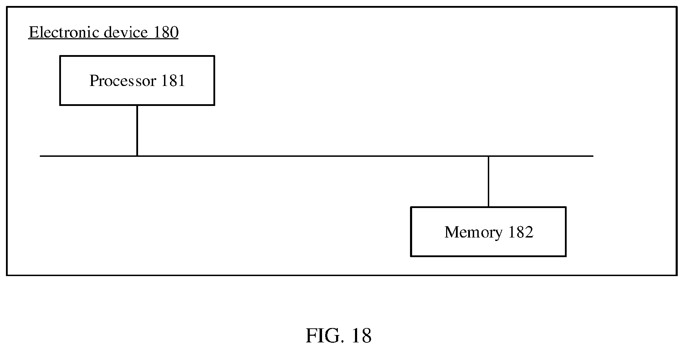

FIG. 18 is a diagram of a hardware structure of an electronic device according to an embodiment of this application. As shown in FIG. 18, the electronic device 180 includes a processor 181 and a memory 182. The memory 182 stores computer-executable instructions. The processor 181 executes the computer-executable instructions stored in the memory 182, to enable the electronic to perform the technical solutions in the foregoing method embodiments. Implementation principles and technical effects thereof are similar, and details are not described herein again.

An embodiment of this application further provides a computer-readable storage medium. The computer-readable storage medium stores a computer program. When the computer program is executed by a processor, the method steps in the foregoing method embodiments are performed.

An embodiment of this application provides a computer program product, including a computer program. When the computer program is run, a computer is enabled to perform the method steps in the foregoing method embodiments.

All or some of the methods described in the foregoing embodiments may be implemented through software, hardware, firmware, or any combination thereof. If the methods are implemented through the software, a function may be stored on the computer-readable medium as one or more instructions or code or transmitted on the computer-readable medium. The computer-readable medium may include a computer storage medium and communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is to carry or store required program code in a form of instruction or data structure, and may be accessed by a computer. In addition, any connection is appropriately referred to as a computer-readable medium. For example, if a coaxial cable, an optical fiber cable, a twisted pair, a digital subscriber line (Digital Subscriber Line, DSL), or a wireless technology (such as infrared, radio, and microwave) is used to transmit software from a website, a server, or another remote source, the coaxial cable, the optical fiber cable, the twisted pair, the DSL, or the wireless technology such as infrared, radio, and microwave is included in a definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combinations should also be included in the scope of the computer-readable medium.

An embodiment of this application further provides a computer program product, including a computer program. When the computer program is run, a computer is caused to perform the foregoing method.

Embodiments of this application are described with reference to flowcharts and/or block diagrams of the method and the device (system) according to embodiments of this application. It should be understood that a computer program or instructions may be used to implement each procedure and/or each block in the flowcharts and/or the block diagrams and a combination of a procedure and/or a block in the flowcharts and/or the block diagrams. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made based on the technical solutions of the present invention shall fall within the protection scope of the present invention.

## Claims

1. A wireless communication configuration method, comprising:
obtaining indication information; and
upon transition to a radio resource control inactive state based on the indication information, storing L1/L2-triggered mobility configuration information.

2. The method according to claim 1, wherein the indication information is carried in a radio resource control release message.

3. The method according to claim 2, wherein the radio resource control release message carries at least one of the following: a timer, a cell identity of a valid cell, and a radio notification area list of a validity area; the timer indicates the L1/L2-triggered mobility configuration information; and both the cell identity of the valid cell and the radio notification area list of the validity area indicate an applicable cell of the L1/L2-triggered mobility configuration information.

4. The method according to any one of claims 1 to 3, wherein the L1/L2-triggered mobility configuration information comprises configuration information of a first serving cell and configuration information of each candidate cell of the first serving cell, and the first serving cell is a serving cell in which the L1/L2-triggered mobility configuration information is stored.

5. The method according to claim 4, wherein the configuration information of the candidate cell comprises at least one of the following: L1 or L2 measurement information, channel resource information, user plane bearer information, control plane bearer information, and information for early acquisition of uplink or downlink synchronization.

6. The method according to any one of claims 1 to 5, further comprising: sending first information to a network device, wherein the first information indicates that the L1/L2-triggered mobility configuration information is available.

7. The method according to claim 6, wherein the first information comprises a terminal device identifier and/or a candidate cell identity, and the candidate cell identity is a cell identity of a candidate cell in the L1/L2-triggered mobility configuration information.

8. The method according to claim 6 or 7, wherein the first information is carried in a radio resource control resume request message.

9. The method according to any one of claims 6 to 8, wherein the first serving cell in which the L1/L2-triggered mobility configuration information is stored is the same as a second serving cell in which the first information is sent; or
the first serving cell in which the L1/L2-triggered mobility configuration information is stored is different from a second serving cell in which the first information is sent.

10. The method according to claim 8, wherein the second serving cell is a candidate cell in the L1/L2-triggered mobility configuration information, and sending the first information to the network device comprises:
under a preset condition, applying the L1/L2-triggered mobility configuration information, and sending the first information to the network device, wherein the preset condition comprises: a current time meets a time specified by the timer, and/or the second serving cell is a valid cell.

11. The method according to any one of claims 6 to 10, further comprising:
obtaining second information, wherein the second information indicates a handling manner of the L1/L2-triggered mobility configuration information; and
performing corresponding handling on the L1/L2-triggered mobility configuration information according to the handling manner.

12. The method according to claim 11, wherein the handling manner comprises one of the following: retaining the L1/L2-triggered mobility configuration information, removing the L1/L2-triggered mobility configuration information, updating the L1/L2-triggered mobility configuration information, or adding the L1/L2-triggered mobility configuration information.

13. A wireless communication configuration method, comprising:
obtaining first information, wherein the first information indicates that L1/L2-triggered mobility configuration information is available.

14. The method according to claim 13, wherein the first information is carried in a radio resource control resume request message.

15. The method according to claim 13 or 14, wherein the first information comprises a terminal device identifier and/or a candidate cell identity, and the candidate cell identity is a cell identity of a candidate cell in the L1/L2-triggered mobility configuration information.

16. The method according to claim 15, further comprising:
obtaining the L1/L2-triggered mobility configuration information based on the terminal device identifier and/or the candidate cell identity; and
determining a handling manner of the L1/L2-triggered mobility configuration information, and indicating second information, wherein the second information indicates the handling manner of the L1/L2-triggered mobility configuration information.

17. The method according to claim 16, wherein obtaining the L1/L2-triggered mobility configuration information comprises:
obtaining the L1/L2-triggered mobility configuration information from a source network device, wherein the source network device is a serving network device that configures the L1/L2-triggered mobility configuration information for the terminal device.

18. The method according to claim 16 or 17, wherein determining the handling manner of the L1/L2-triggered mobility configuration information comprises:
obtaining resource usage of a second serving cell and a neighboring cell of the second serving cell, wherein the second serving cell is a cell currently accessed by the terminal device;
obtaining a measurement report carried in the radio resource control resume request message; and
determining the handling manner of the L1/L2-triggered mobility configuration information based on the resource usage and the measurement report.

19. The method according to claim 18, wherein the handling manner comprises one of the following: retaining the L1/L2-triggered mobility configuration information, removing the L1/L2-triggered mobility configuration information, updating the L1/L2-triggered mobility configuration information, or adding the L1/L2-triggered mobility configuration information.

20. A wireless communication configuration method, comprising:
obtaining indication information, wherein the indication information comprises a terminal device identifier and/or a candidate cell identity;
retrieving L1/L2-triggered mobility configuration information corresponding to the terminal device identifier and/or the candidate cell identity;
obtaining validity information of configuration information of a candidate cell in the L1/L2-triggered mobility configuration information;
updating the L1/L2-triggered mobility configuration information based on the validity information, to obtain updated L1/L2-triggered mobility configuration information; and
sending response information, wherein the response information comprises the L1/L2-triggered mobility configuration information or the updated L1/L2-triggered mobility configuration information.

21. The wireless communication configuration method according to claim 20, wherein the indication information is carried in a terminal device context request message or another Xn interface message.

22. The wireless communication configuration method according to claim 20 or 21, wherein the response information is carried in a terminal device context response message or another Xn interface message.

23. The wireless communication configuration method according to any one of claims 20 to 22, wherein obtaining the validity information of the configuration information of the candidate cell in the L1/L2-triggered mobility configuration information comprises:
sending a first request message to another network device corresponding to the candidate cell, wherein the first request message indicates the another network device to determine the validity information of the configuration information of the candidate cell; and
obtaining the validity information sent by the another network device.

24. The wireless communication configuration method according to any one of claims 20 to 23, wherein the validity information comprises at least one of the following: a cell identity of a candidate cell whose configuration information is valid, a cell identity of a candidate cell whose configuration information is unavailable, and a cell identity of a candidate cell whose configuration information needs to be updated that are in the L1/L2-triggered mobility configuration information.

25. The wireless communication configuration method according to claim 24, wherein updating the L1/L2-triggered mobility configuration information based on the validity information, to obtain the updated L1/L2-triggered mobility configuration information comprises:
if the validity information indicates that the configuration information of the candidate cell is unavailable, removing the configuration information of the candidate cell from the L1/L2-triggered mobility configuration information; or
if the validity information indicates that the configuration information of the candidate cell is valid, retaining the configuration information of the candidate cell in the L1/L2-triggered mobility configuration information; or
if the validity information indicates that the configuration information of the candidate cell needs to be updated, retaining the configuration information of the candidate cell in the L1/L2-triggered mobility configuration information or removing the configuration information of the candidate cell from the L1/L2-triggered mobility configuration information.

26. The wireless communication configuration method according to any one of claims 20 to 25, further comprising:
adding configuration information of a candidate cell to the L1/L2-triggered mobility configuration information based on a second serving cell and neighboring cell information of the second serving cell, wherein the second serving cell is a cell currently accessed by the terminal device.

27. An electronic device, comprising: a processor and a memory, wherein
the memory stores computer-executable instructions; and
the processor executes the computer executable instructions stored in the memory, to enable the electronic device to perform the method according to any one of claims 1 to 12, or the method according to any one of claims 13 to 19, or the method according to any one of claims 20 to 26.

28. A computer-readable storage medium, wherein the computer-readable storage medium stores a computer program, and when the computer program is executed by a processor, the method according to any one of claims 1 to 12 is implemented, or the electronic device is enabled to perform the method according to any one of claims 13 to 19, or the electronic device is enabled to perform the method according to any one of claims 20 to 26.

29. A computer program product, comprising a computer program, wherein when the computer program is run, a computer is enabled to perform the method according to any one of claims 1 to 12, or the electronic device is enabled to perform the method according to any one of claims 13 to 19, or the electronic device is enabled to perform the method according to any one of claims 20 to 26.
